(19) Europäisches Patentamt / European Patent Office / Office européen des brevets

(11) **EP 3 557 306 B1**

(12) **EUROPÄISCHE PATENTSCHRIFT**

(45) Veröffentlichungstag und Bekanntmachung des Hinweises auf die Patenterteilung:
**27.11.2024 Patentblatt 2024/48**

(21) Anmeldenummer: **19164289.1**

(22) Anmeldetag: **21.03.2019**

(51) Internationale Patentklassifikation (IPC):
**G02B 21/24** (2006.01)    **G02B 21/36** (2006.01)

(52) Gemeinsame Patentklassifikation (CPC):
**G02B 21/245; G02B 21/244; G02B 21/365**

(54) **AUTOFOKUS MIT WINKELVARIABLER BELEUCHTUNG**

AUTOFOCUS WITH VARIABLE ANGLE ILLUMINATION

MISE AU POINT AUTOMATIQUE POURVUE D'ÉCLAIRAGE À ANGLE VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2018 DE 102018107356**

(43) Veröffentlichungstag der Anmeldung:
**23.10.2019 Patentblatt 2019/43**

(73) Patentinhaber: **Carl Zeiss Microscopy GmbH 07745 Jena (DE)**

(72) Erfinder:
• **STOPPE, Lars 07743 Jena (DE)**
• **OHRT, Thomas 07751 Golmsdorf (DE)**
• **DIETRICH, Christian 07743 Jena (DE)**
• **STICKER, Markus 07749 Jena (DE)**

(74) Vertreter: **Kraus & Lederer PartGmbB Thomas-Wimmer-Ring 15 80539 München (DE)**

(56) Entgegenhaltungen:
EP-A1- 3 121 637        WO-A1-2017/081539
DE-A1- 102014 109 687        DE-A1- 102014 113 256

**Beschreibung**

TECHNISCHES GEBIET

Verschiedene Beispiele der Erfindung betreffen im Allgemeinen das Erfassen einer Vielzahl von Bildern bei einer Vielzahl von winkelvariablen Beleuchtungsgeometrien und das entsprechende Einstellen einer Z-Position einer Probenbühne eines Mikroskops. Verschiedene Beispiele der Erfindung betreffen insbesondere das Einstellen der Z-Position mit erhöhter Genauigkeit.

HINTERGRUND

In verschiedenen Anwendungen wird eine winkelvariable Beleuchtung eines Messobjekts bei der Mikroskopie-Bildgebung verwendet. Dabei werden winkelvariable Beleuchtungsgeometrien zur Beleuchtung des Messobjekts verwendet, die eine mit dem Einfallswinkel variierende Lichtstärke aufweisen. Beispielsweise kann das Messobjekt aus einer oder mehreren ausgewählten Beleuchtungswinkeln bzw. Beleuchtungsrichtungen beleuchtet werden. Die winkelvariable Beleuchtung wird manchmal auch als winkelselektive Beleuchtung oder im Winkelraum strukturierte Beleuchtung bezeichnet.

Grundsätzlich kann die winkelvariable Beleuchtung mit unterschiedlichsten Anwendungsfällen kombiniert werden. Ein typischer Anwendungsfall ist die Z-Positionierung einer Probenbühne, beispielsweise um ein auf der Probenbühne angeordnetes Messobjekt zu fokussieren. Eine solche Technik ist etwa aus DE 10 2014 109 687 A1 bekannt. In dieser wird vorgeschlagen zum Bestimmen einer Position eines Objekts parallel zur optischen Achse einer optischen Vorrichtung, das Objekt aus einer ersten Beleuchtungsrichtung und aus einer zweiten Beleuchtungsrichtung beleuchtet und jeweils ein Bild zu erfassen. Basierend auf einem Abstand zwischen Abbildungsorten des Objekt in den Bildern wird die Position des Objekts bestimmt.

Ein weiteres Mikroskop mit einer variablen Beleuchtung zur Einstellung der Fokussierung ist aus der Offenbarung der WO 2017/081539 A1 bekannt.

Im Zusammenhang mit solchen Autofokus-Techniken wurde aber beobachtet, dass häufig die Zuverlässigkeit und/oder Genauigkeit begrenzt ist. Dies liegt oftmals an Störstrukturen, die neben dem Messobjekt von den erfassten Bildern abgebildet werden. Außerdem kann es sich um eine schwach kontrastierende Probe handeln, die wenig Absorption und wenig Phasenhub aufweist. Derart ist das von der Probe erhaltbare Signal beschränkt. Dann kann oftmals keine oder nur eine unzureichende Trennung zwischen der Abbildung des Messobjekts einerseits und den Störstrukturen andererseits vorliegen, wodurch die Bestimmung einer Objektverschiebung in den Bildern als Grundlage für das Einstellen der Z-Position nicht oder falsch oder mit unzureichender Genauigkeit möglich sein kann. Dann kann eine Autofokussierung fehlschlagen oder ungenau sein.

ZUSAMMENFASSUNG

Deshalb besteht ein Bedarf für verbesserte Techniken der Z-Positionierung mit winkelvariabler Beleuchtung. Insbesondere besteht ein Bedarf für Techniken, welche die Z-Positionierung mit großer Zuverlässigkeit und hoher Genauigkeit ermöglichen.

Diese Aufgabe wird von den Merkmalen der unabhängigen Patentansprüche gelöst. Die Merkmale der abhängigen Patentansprüche definieren Ausführungsformen.

Ein Verfahren zum Betreiben eines Mikroskops umfasst das Erfassen von mindestens einem Bild bei einer Vielzahl von winkelvariablen Beleuchtungsgeometrien. Das Verfahren umfasst ferner das Durchführen einer Trennung einer Abbildung eines Messobjekts von Störstrukturen in dem mindestens einen Bild. Das Durchführen der Trennung basiert dabei auf Steuerdaten, welche indikativ für a-priori Wissen sind. Basierend auf der Trennung umfasst das Verfahren dann ferner das Erkennen von gegenüber einer Veränderung der winkelvariablen Beleuchtungsgeometrie veränderlichen Anteilen in dem Bild als Objektverschiebung des Messobjekts. Außerdem umfasst das Verfahren das Bestimmen einer Defokusposition des Messobjekts basierend auf der Objektverschiebung. Das Verfahren umfasst das Einstellen einer Z-Position einer Probenbühne des Mikroskops basierend auf der Defokusposition.

Dabei bezeichnet Z-Position im Allgemeinen eine Positionierung der Probenbühne parallel zu einer optischen Achse des Mikroskops. Die lateralen Richtungen, d.h. senkrecht zur optischen Achse, werden typischerweise durch die X-Position und Y-Position beschrieben. Durch Variation der Z-Position kann die Defokusposition des Messobjekts verändert werden.

Dabei ist es im Allgemeinen möglich, unterschiedliche Techniken zu Erfassen des mindestens einen Bilds bei der Vielzahl von winkelvariablen Beleuchtungsgeometrien auszuführen.

Zum Erfassen des mindestens einen Bilds bei der Vielzahl von winkelvariablen Beleuchtungsgeometrien kann das Verfahren beispielsweise umfassen: Ansteuern eines Beleuchtungsmoduls mit einer Vielzahl von separat schaltbaren Lichtquellen. Jede Beleuchtungsgeometrie kann dann mit ein oder mehreren angeschalteten Lichtquellen assoziiert sein. Dadurch kann erreicht werden, dass die unterschiedlichen Beleuchtungsgeometrien unterschiedliche Beleuchtungswinkel - aus denen das auf der Probenbühne angeordnete Messobjekt beleuchtet wird - umfassen. In anderen Worten variiert die Lichtintensität als Funktion des Einfallswinkels von Beleuchtungsgeometrie zu Beleuchtungsgeometrie.

In einer weiteren Möglichkeit wird eine einstellbare Blende verwendet, wobei die Blende beispielsweise vor einer ausgedehnten Lichtquelle oder in einer zur Lichtquelle abgebildeten Ebene angeordnet ist. Beispielsweise könnte die einstellbare Blende durch eine Flüssigkristallmatrix ausgebildet sein, oder als DMD-Vorrichtung (engl. digital micromirror device).

Zum Erfassen des mindestens einen Bilds bei der Vielzahl von winkelvariablen Beleuchtungsgeometrien kann das Verfahren umfassen: Ansteuern eines Detektors, der die Bilder bereitstellt.

Das Erfassen des mindestens einen Bilds kann auch bereits eine Vorverarbeitung des mindestens einen Bilds umfassen. Zum Beispiel könnte eine Normierung durchgeführt werden, etwa indem ein mittlerer Kontrast abgezogen wird, etc.. Es könnte beispielsweise eine Spreizung des Histogramms zur Kontrasterhöhung durchgeführt werden.

Beispielsweise könnte eine Vielzahl von Bildern erfasst werden. Es wäre z.B. möglich, dass pro Beleuchtungsgeometrie ein zugehöriges Bild erfasst wird. In anderen Beispielen wäre es aber auch möglich, dass pro Bild mehr als eine Beleuchtungsgeometrie überlagert angewendet werden. Dabei könnte z.B. eine erste Beleuchtungsgeometrie einer ersten Beleuchtungsrichtung entsprechen und eine zweite Beleuchtungsgeometrie einer zweiten Beleuchtungsrichtung entsprechen; dabei wäre es möglich, dass diese Beleuchtungsgeometrien gleichzeitig angewendet werden.

Als allgemeine Regel können Bilder in den hierin beschriebenen Techniken in Durchlicht-Geometrie oder in Auflicht-Geometrie erfasst werden. Dies bedeutet, dass die Probenbühne zwischen dem Beleuchtungsmodul und dem Detektor angeordnet sein kann (Durchlicht-Geometrie); oder dass das Beleuchtungsmodul und der Detektor auf derselben Seite der Probenbühne angeordnet sind (Auflicht-Geometrie).

Der Detektor bzw. eine assoziierte Abbildungsoptik kann eine Detektor-Apertur aufweisen, welche den Feldbereich des auf eine sensitive Fläche des Detektors abgebildeten Lichts begrenzt. Wenn die Beleuchtungsgeometrie einen Beleuchtungswinkel umfasst, der ohne Streuung direkt vom Beleuchtungsmodul durch die Detektor-Apertur gelangt, so entspricht dies einer Hellfeld-Bildgebung. Ansonsten liegt eine Dunkelfeld-Bildgebung vor. Als allgemeine Regel können die in den verschiedenen hierin beschriebenen Techniken verwendeten Beleuchtungsgeometrien zur Hellfeld-Bildgebung und/oder zur Dunkelfeld-Bildgebung eingerichtet sein.

Die Defokusposition des Messobjekts könnte weiterhin basierend auf mindestens einem optischen Systemparameter des Mikroskops bestimmt werden.

In den verschiedenen hierin beschriebenen Beispielen können unterschiedlichste Arten und Typen von Störstrukturen berücksichtigt werden. Beispiele für Störstrukturen umfassen: Lichtreflexe; Abschattungen; Effekte aufgrund von Verunreinigungen, zum Beispiel im Bereich der Probenbühne oder aber auch an statischen Bereichen einer Abbildungsoptik des Mikroskops; Sensorrauschen des Detektors; etc.. Beispiele für Störstrukturen umfassen zum Beispiel Effekte aufgrund von Staubpartikeln, die im optischen System des Mikroskops auf oder nahe der Kamera oder an einer Grenzfläche der Probenbühne liegen. Typischerweise tragen solche und andere Störstrukturen mit einem signifikanten Kontrast zur Bildentstehung der Vielzahl von Bildern bei. Dies erschwert eine Auswertung von physikalischer Information im Zusammenhang mit dem Messobjekt. Die hierin beschriebenen Techniken ermöglichen es aber, eine Trennung der Störstrukturen von der Abbildung des Messobjekts durchzuführen.

Als allgemeine Regel können die hierin beschriebenen Techniken zur Bildgebung von unterschiedlichsten Arten und Typen von Messobjekten dienen. Beispielsweise wäre es möglich, dass Messobjekte mit einem großen Phasen-Anteil vermessen werden: hierbei wird typischerweise ein Phasenversatz des durch das Messobjekt hindurchtretenden Lichts bewirkt, jedoch keine oder nur eine geringe Abschwächung der Amplitude des Lichts. In anderen Beispielen könnten aber auch Amplituden-Messobjekte vermessen werden, wobei hier signifikante Absorption beobachtet wird.

Die Objektverschiebung kann die Änderung der Position der Abbildung des Messobjekts in Abhängigkeit von der verwendeten Beleuchtungsgeometrie beschreiben. Beispielsweise kann die Verwendung unterschiedlicher Beleuchtungswinkel in unterschiedlichen Positionen der Abbildung des Messobjekts resultieren. Der entsprechende Abstand zwischen den Abbildungen des Messobjekts kann die Objektverschiebung bezeichnen.

Das a-priori Wissen bzw. die entsprechenden Steuerdaten können vor dem Erfassen der Vielzahl von Bildern bzw. im Allgemeinen vor dem Durchführen der Bildgebung vorhanden sein. Das a-priori Wissen kann basierend auf bestimmten Randbedingungen oder basierend auf einem zugehörigen Systemzustand des Mikroskops ermittelt werden. Das a-priori Wissen kann also in bestimmten Umständen der Bildgebung begründet sein. Das a-priori Wissen kann aus anderen Umständen als der Messung selbst abgeleitet werden.

Beispielsweise könnte das a-priori Wissen Benutzer-bezogen sein. Es wäre etwa möglich, dass die Steuerdaten von einer Benutzerschnittstelle und damit von einem Benutzer des Mikroskops erhalten werden. Beispielsweise könnte der Benutzer dadurch vorgeben, welche Art oder welcher Typ von Messobjekt verwendet wird. Der Benutzer könnte alternativ oder zusätzlich auch ein oder mehrere Systemparameter des Mikroskops spezifizieren. Dies ermöglicht es, die Randbedingungen der Messung durch den Benutzer flexibel zu spezifizieren. Damit kann typischerweise eine hohe Genauigkeit bei der Trennung erreicht werden; andererseits kann der teilautomatische Charakter nachteilig in Hinsicht auf eine Zuverlässigkeit des Verfahrens sein.

Eine solche teilautomatische Ermittlung der Steuerdaten kann in anderen Beispielen ergänzt oder ersetzt werden durch eine vollautomatische Ermittlung der Steuerdaten. Beispielsweise wäre es möglich, dass die Steuerdaten von einem trainierten Klassifikator erhalten werden. Der trainierte Klassifikator kann dabei auf der Vielzahl von Bildern operieren. Dies bedeutet, dass der Klassifikator bestimmte Eigenschaften der Vielzahl von Bildern erkennt und vordefinierten Klassen zuordnen kann. In einem solchen Beispiel kann das Klassifikator-Modell des Klassifikators das a-priori Wissen implementieren, welches für das Durchführen der Trennung der Abbildung des Messobjekts von den Störstrukturen erforderlich ist. Zum Beispiel kann eine solche Implementierung dann besonders zuverlässig die Trennung ermöglichen, wenn Art und Typ der Störstrukturen und Art und Typ des Messobjekts in unterschiedlichen Bildgebungsvorgängen gleich bleiben - und damit ein genaues Training des Klassifikators zum Erhalten eines genauen Klassifikator-Modells ermöglicht wird.

Durch das Berücksichtigen des a-priori Wissens kann eine zuverlässige Trennung der Abbildung des Messobjekts von den Störstrukturen erreicht werden. Dadurch kann wiederum erreicht werden, dass die Objektverschiebung des Messobjekts besonders genau bestimmt werden kann. Insbesondere kann nämlich erreicht werden, dass die Störstrukturen - obwohl sie in dem mindestens einen Bild beinhaltet sein können - bei dem Bestimmen der Defokusposition des Messobjekts nicht oder nur in geringem Maße berücksichtigt werden. Dies kann insbesondere auch für solche Fälle erreicht werden, in denen das Messobjekt selbst nur einen vergleichsweise geringen Kontrast in der Vielzahl von Bildern aufweist, was zum Beispiel typischerweise für Phasen-Messobjekte wie zum Beispiel speziell präparierte Zellen oder durchlässige Zellmembranen der Fall ist.

Solche Techniken können insbesondere im Zusammenhang mit dem Einstellen der Z-Position der Probenbühne für Autofokus-Techniken hilfreich sein. Dabei wird die Defokusposition des Messobjekts durch geeignetes Einstellen der Z-Position minimiert. Insbesondere Autofokus-Tracking-Techniken können angewendet werden, bei denen über einen verlängerten Zeitraum - beispielsweise Minuten oder Stunden, etwa im Zusammenhang mit einer Langzeit-Messung - die Z-Position der Probenbühne geeignet eingestellt werden soll, um das Messobjekt in der Fokusebene des optischen Systems zu halten. Für Langzeit-Messungen ist dabei eine stabile und genaue und robuste Autofokussierung erforderlich. Auch besonders kleine Veränderungen der Defokusposition des Messobjekts sollen zuverlässig detektiert werden. In solchen Szenarien können die hierin beschriebenen Techniken eine wirksame Trennung der Abbildung des Messobjekts von den Störstrukturen und damit eine zuverlässige Bestimmung der Defokusposition ermöglichen.

Grundsätzlich sind Techniken zum Bestimmen der Defokusposition und zum Einstellen der Z-Position bekannt aus: DE 10 2014 109 687 A1. Solche Techniken können auch im Zusammenhang mit den hierin beschriebenen Implementierungen kombiniert werden.

Bei manchen Varianten kann das a-priori Wissen mindestens eine Richtung der Objektverschiebung in dem mindestens einen Bild umfassen.

Eine solche Berücksichtigung der Richtung der Objektverschiebung weist den Vorteil auf, dass Änderungen in anderen Richtungen herausgefiltert werden können. Dadurch kann die Trennung von Abbildung des Messobjekts und den Störstrukturen besonders genau erfolgen.

Beispielsweise kann die Richtung der Objektverschiebung auf Grundlage der verwendeten Lichtquellen bzw. im Allgemeinen auf Grundlage des Beleuchtungsmoduls vorhergesagt werden. Z.B. könnte eine geometrische Anordnung der Lichtquellen berücksichtigt werden. Es wäre also etwa möglich, dass das Verfahren weiterhin das Bestimmen der mindestens einen Richtung der Objektverschiebung basierend auf einer relativen Positionierung von Lichtquellen des Beleuchtungsmoduls, die mit der Vielzahl von winkelvariablen Beleuchtungsgeometrien assoziiert sind, umfasst.

Beispielsweise könnte ein erstes Bild einer Vielzahl von Bildern bei einer winkelvariablen Beleuchtungsgeometrie erfasst werden, die der Beleuchtung des Messobjekts durch eine erste Leuchtdiode des Beleuchtungsmoduls entspricht. Dies kann einem ersten Beleuchtungswinkel entsprechen. Ein zweites Bild der Vielzahl von Bildern könnte bei einer winkelvariablen Beleuchtungsgeometrie erfasst werden, die der Beleuchtung des Messobjekts durch eine zweite Leuchtdiode des Beleuchtungsmoduls entspricht. Dies kann einem zweiten Beleuchtungswinkel entsprechen. Dann wäre es möglich, dass eine geometrische Verbindungslinie zwischen der ersten Leuchtdiode und der zweiten Leuchtdiode eine bestimmte Orientierung aufweist, die auch die Richtung der Objektverschiebung zwischen dem ersten Bild und dem zweiten Bild definiert.

Die Auswertung zum Erkennen der Objektverschiebung des Messobjekts kann grundsätzlich durch eine Korrelation erfolgen. Dabei kann beispielsweise eine paarweise Korrelation zwischen den Bildern einer Vielzahl von erfassten Bildern durchgeführt werden. Beispielsweise kann eine 2-D Korrelation durchgeführt werden. Dann wäre es möglich, dass solche Datenpunkte der Korrelation ausgewählt werden, die der mindestens einen Richtung der Objektverschiebung entsprechen. Eine solche Auswahl kann z.B. in einer Korrelationsmatrix erfolgen. Andere Datenpunkte der Korrelation können verworfen werden. Dies implementiert die Trennung zwischen der Abbildung des Messobjekts einerseits und den Störstrukturen andererseits. Die Objektverschiebung kann dann basierend auf den ausgewählten Datenpunkten erkannt werden.

Dabei kann die Korrelation grundsätzlich zwischen unterschiedlichen Bildern einer Vielzahl von Bildern durchgeführt werden (manchmal als Kreuzkorrelation bezeichnet) oder aber auf einem einzelnen Bild durchgeführt werden (manchmal als Autokorrelation bezeichnet).

Weil auf Grundlage des a-priori Wissens nur eine Teilmenge der Datenpunkte zum Erkennen der Objektverschiebung berücksichtigt werden, kann der Suchraum eingeengt werden, indem nicht relevante Datenpunkte verworfen werden. Eine Filterung wird möglich. Dies erhöht die Zuverlässigkeit, mit der die Objektverschiebung des Messobjekts erkannt werden kann.

Insbesondere wäre es möglich, dass anstatt einer 2-D Auswertung der Korrelation - z.B. in beiden lateralen Richtungen senkrecht zur optischen Achse - eine 1-D Auswertung der Korrelation entlang der mindestens einen Richtung für entsprechend ausgewählte Datenpunkte erfolgen kann. Diese ausgewählten Datenpunkte können also in anderen Worten auf einer Geraden angeordnet sein, die durch das Zentrum der Korrelation (keine Verschiebung zwischen den zwei berücksichtigten Bildern) verläuft und die eine Orientierung gemäß der entsprechenden Richtung der mindestens einen Richtung aufweist.

Ferner könnte das Verfahren das Auswählen von ersten Datenpunkten der Korrelation umfassen. Die ersten Datenpunkte können einer ersten Richtung der mindestens einen Richtung entsprechen. Das Verfahren kann ferner das Auswählen von zweiten Datenpunkten der Korrelation umfassen. Die zweiten Datenpunkte können einer zweiten Richtung der mindestens einen Richtung entsprechen. Dabei kann die zweite Richtung verschieden von der ersten Richtung sein. Das Verfahren kann auch das Überlagern der ersten Datenpunkte und der zweiten Datenpunkte umfassen. Zum Beispiel könnte eine Summe der ersten Datenpunkte und der zweiten Datenpunkte gebildet werden, wobei z.B. solche Datenpunkte miteinander summiert werden, die einen gleichen Abstand zum Zentrum der Korrelation aufweisen, d. h. die gleichen Objektverschiebungen zwischen dem ersten Bild und dem zweiten Bild entsprechen. Dann könnte die Objektverschiebung basierend auf den ausgewählten und überlagerten Datenpunkten erkannt werden.

Durch eine solche Berücksichtigung mehrerer Richtungen ist es möglich, mehrere Lichtquellen des Beleuchtungsmoduls im Zusammenhang mit den verwendeten Beleuchtungsgeometrien zu berücksichtigen. Pro Beleuchtungsgeometrie können also mehrere Beleuchtungswinkel berücksichtigt werden. Durch die Überlagerung von Datenpunkten kann wiederum ein Signal zu Rausch-Verhältnis erhöht werden.

Es ist nicht in allen Varianten erforderlich, dass das a-priori Wissen die mindestens eine Richtung der Objektverschiebung umfasst. In anderen Beispielen könnte das a-priori Wissen alternativ oder zusätzlich auch andere Information beinhalten. In einem Beispiel könnte das a-priori Wissen beispielsweise die Abbildungspositionen der Störstrukturen umfassen; das a-priori Wissen könnte alternativ oder zusätzlich z.B. auch eine Abbildungsposition des Messobjekts umfassen. Eine solche Implementierung kann zum Beispiel erstrebenswert sein, wenn die Störstrukturen mittels eines trainierten Klassifikators identifiziert werden; und/oder wenn das Messobjekt mittels eines trainierten Klassifikators identifiziert wird. Auch eine Markierung der Abbildungspositionen der Störstrukturen durch einen Benutzer über eine Benutzerschnittstelle kann durch eine solche Implementierung des a-priori Wissens gefördert werden.

Insbesondere in einer solchen Variante könnten die verschiedenen Bilder in Bereiche zerlegt werden, die anschließend miteinander verrechnet werden, um die Objektverschiebung des Messobjekts zu erkennen. Eine solche Technik kann auch als Bildkachelung (engl. tiling) bezeichnet werden. Es wäre also im Allgemeinen möglich, dass in Abhängigkeit von den Abbildungspositionen der Störstrukturen eine Bildkachelung auf das mindestens eine Bild angewendet wird. Dann könnte die Auswertung des mindestens einen Bilds in solchen Bildkacheln unterdrückt werden, welche die Störstrukturen beinhalten. Die Bildkachelung kann die Trennung der Abbildung des Messobjekts von den Störstrukturen fördern.

Zur Identifizierung der Störstrukturen und damit zum Bestimmen der Abbildungspositionen der Störstrukturen und/oder zur Trennung der Abbildung des Messobjekts von den Störstrukturen können unterschiedliche Techniken eingesetzt werden. Beispielsweise wäre es möglich, dass das Messobjekt bewegt wird, etwa in z-Richtung; ortsfeste Störstrukturen, die nicht an der Probenbühne angebracht sind, wären dann ortsfest und könnten durch Differenzbildung erkannt werden. Im Allgemeinen könnte also auf Referenz-Messungen zurückgegriffen werden, bei denen ein Bild ohne Messobjekt bzw. im Allgemeinen mit variablem Messobjekt erfasst wird, etwa in einer Kalibrationsphase vor der eigentlichen Messung. Dann können in einem entsprechenden Referenzbild die Störstrukturen erkannt werden, die durch die Abbildungsoptik des optischen Systems verursacht werden. Eine weitere - alternativ oder zusätzlich einsetzbare - Möglichkeit zum Erkennen der Störstrukturen umfasst die Verwendung von Steuerdaten, die indikativ für den Kontrast der Störstrukturen in der Vielzahl von Bildern sind. Dies bedeutet, dass das a-priori Wissen einen Kontrast der Störstrukturen in den Bildern umfassen kann. Zum Beispiel könnte das a-priori Wissen den Kontrast der Störstrukturen relativ in Bezug auf den Kontrast der Abbildung des Messobjekts umfassen. Beispielsweise können solche Techniken eine Art bzw. einen Typ der Störstrukturen berücksichtigen. Zum Beispiel könnte bei der Bildgebung von Phasenobjekten, wie etwa adhärenten Zellen, der Kontrast des entsprechenden Messobjekts vergleichsweise klein sein; während der Kontrast der Störstrukturen größer sein kann. In einer weiteren Implementierung - bei der die Steuerdaten über die Benutzerschnittstelle empfangen werden - könnte der Benutzer die Abbildungspositionen der Störstrukturen markieren. In noch einer weiteren Implementierung könnte der Kontrast zum Beispiel auch im Zusammenhang mit einem Signal-zu-Rausch-Verhältnis berücksichtigt werden: zum Beispiel kann eine paarweise Korrelation zwischen Bildern der Vielzahl von Bildern durchgeführt werden und jeweils ein Korrelationsmaximum in der Korrelation erkannt werden. Dann kann gefordert werden, dass das Korrelationsmaximum einen bestimmten Schwellenwert nicht unterschreitet oder überschreitet. Der Schwellenwert kann zum Beispiel basierend auf dem Kontrast der Störstrukturen festgelegt sein. Für kontrastarme Messobjekte können solche Korrelationsmaxima mit besonders großem Wert verworfen werden, weil diese dann Störstrukturen entsprechen. Basierend auf dem Kontrast der Störstrukturen kann also im Allgemeinen mindestens ein erkanntes Korrelationsmaximum der Korrelation verworfen werden oder aber beibehalten werden und zum Erkennen der Objektverschiebung berücksichtigt werden. Eine weitere Möglichkeit umfasst einen Algorithmus oder eine Eliminierung der Störstrukturen durch eine Kalibration, ähnlich einer Shading-Korrektur. Hierbei könnte zum Beispiel im Zusammenhang mit der Bildkachelung eine Auswertung der Vielzahl von Bildern in solchen Bildkacheln der Bildkachelung unterdrückt werden, welche die Störstrukturen beinhalten.

In einem weiteren Beispiel kann das a-priori Wissen auch einen Suchbereich für die Objektverschiebung umfassen. Dies kann bedeuten, dass der Abstand der Abbildungen des Messobjekts für zwei unterschiedliche Beleuchtungsgeometrien durch den Suchbereich eingeschränkt werden kann. Es können eine obere Schranke und/oder eine untere Schranke definiert werden. Dabei kann der Suchbereich auch bei mehreren Iterationen einer Z-Positionierung wiederholt angepasst werden; dies bedeutet, dass der Suchbereich von Iteration zu Iteration angepasst werden kann. Das a-priori Wissen kann also insbesondere den Suchbereich als Funktion der Iteration umfassen. Derart kann insbesondere berücksichtigt werden, dass typischerweise die Stärke der Defokussierung - und damit die antizipierte Objektverschiebung - von Iteration zu Iteration variieren kann. Z.B. kann bei Beginn eines Autofokus-Tracking-Verfahrens angenommen werden, dass eine große Defokussierung vorliegt. Sobald aber eine Autofokussierung durch Durchführen einer oder mehrerer initialer Iterationen erfolgt ist, liegt typischerweise nur noch eine kleinere Defokussierung vor. Dies kann bei der Dimensionierung des Suchbereichs bzw. damit assoziierter Schwellenwerte berücksichtigt werden. Der Suchbereich kann - alternativ oder zusätzlich zu einer solchen Abhängigkeit von der Iteration der Z-Positionierung - auch eine Abhängigkeit vom Tiefenschärfebereich der Abbildungsoptik des Mikroskops aufweisen.

In noch einem weiteren Beispiel kann das a-priori Wissen eine Ortsraumperiodizität des Messobjekts umfassen. Dem liegt die Erkenntnis zugrunde, dass z.B. insbesondere technische Proben - etwa Halbleiter-Chipsätze, Textilgewebe, Werkstoffproben, usf. - häufig eine Textur oder Topologie mit signifikanten periodischen Anteilen aufweisen können. Dies kann durch das a-priori Wissen erfasst sein. Dadurch kann erreicht werden, dass die Objektverschiebung aufgrund wechselnder Beleuchtungsgeometrien zuverlässig unterschieden werden kann von Artefakten mit ähnlichem Erscheinungsbild aufgrund der Ortsraumperiodizität. Insbesondere wäre es beispielsweise möglich, dass das a-priori Wissen eine oder mehrere Richtungen der Ortsraumperiodizität umfasst. Dann kann es möglich sein, die Beleuchtungsgeometrien dazu komplementär zu wählen, sodass Verwechslungen vermieden werden. Eine zuverlässigere Trennung der Abbildung des Messobjekts von den Störstrukturen wird möglich.

Voranstehend wurden vornehmlich Techniken beschrieben, welche auf der Berücksichtigung von a-priori Wissen bei der Trennung der Abbildung des Messobjekts von den Störstrukturen beruhen. Solche Techniken können insbesondere dann hilfreich sein, wenn sich bestimmte Eigenschaften der Bildgebung auf Grundlage der Steuerdaten antizipieren lassen. In weiteren Beispielen wäre es alternativ oder zusätzlich auch möglich, Referenzmessungen zu implementieren. Solche Referenzmessungen könnten beispielsweise verschachtelt mit dem Erfassen der Vielzahl von Bildern im Zeitraum angeordnet sein; derart kann auch im Zusammenhang mit Langzeit-Messungen eine zuverlässige Trennung der Abbildung des Messobjekts von den Störstrukturen erreicht werden. Drifts können vermieden werden. Außerdem können systematische Ungenauigkeiten, beispielsweise aufgrund von Fehlern im a-priori Wissen, vermieden werden. Solche Techniken werden nachfolgend näher beschrieben. Solche Techniken können kombiniert werden mit den voranstehend beschriebenen Techniken, die z.B. die Verwendung von a-priori Wissen zur Trennung der Abbildung des Messobjekts von den Störstrukturen betreffen.

Ein Verfahren zum Betreiben eines Mikroskops umfasst das Erfassen von mindestens einem Bild bei einer Vielzahl von winkelvariablen Beleuchtungsgeometrien. Das Verfahren umfasst auch das Erfassen von einer Vielzahl von Referenzbildern bei einer Vielzahl von Z-Positionen einer Probenbühne des Mikroskops. Das Verfahren umfasst ferner das Erkennen von gegenüber einer Variation der Z-Position unveränderlichen Anteilen in der Vielzahl von Referenzbildern als Störstrukturen. Das Verfahren umfasst ferner das Durchführen einer Trennung einer Abbildung eines Messobjekts von den erkannten Störstrukturen in dem mindestens einen Bild. Das Verfahren umfasst auch das Erkennen von gegenüber einer Veränderung der winkelvariablen Beleuchtungsgeometrie veränderlichen Anteilen in dem mindestens einen Bild als Objektverschiebung des Messobjekts; dies basiert auf der Trennung. Das Verfahren umfasst auch das Bestimmen einer Defokusposition des Messobjekts basierend auf der Objektverschiebung und das Einstellen einer Z-Position einer Probenbühne des Mikroskops basierend auf der Defokusposition.

Mittels solcher Techniken können also Einflüsse von Störstrukturen reduziert oder unterdrückt werden, deren Ursache - wie z.B. Staubpartikel etc. - nicht zusammen mit der Probenbühne bewegt wird, also die zum Beispiel nicht Teil des Messobjekts oder der Probenbühne ist. Die Referenz-Messungen ergänzen also die winkelvariable Beleuchtung um eine zusätzliche Repositionierung der Probenbühne.

Dabei wäre es grundsätzlich möglich, dass das mindestens eine Bild und die Vielzahl von Referenzbilder unabhängig voneinander erfasst werden. Z.B. könnte für die Referenzbilder keine oder eine andere Beleuchtungsgeometrie verwendet werden, als für das mindestens eine Bild. In anderen Beispielen wäre es aber möglich, dass zumindest eines oder einige Referenzbilder der Vielzahl von Referenzbildern dem mindestens einen Bild entsprechen. Dies kann bedeuten, dass z.B. dieselbe Beleuchtungsgeometrie(n) und/oder dieselbe Z-Position für die entsprechenden Bilder verwendet wird. Dadurch kann der Zeitaufwand zur Messung reduziert werden, weil entsprechende Bilder nicht doppelt erfasst werden müssen.

In solchen Anwendungsfällen ist es also nicht unbedingt erforderlich, auf a-priori Wissen zurückzugreifen. Vielmehr kann mit Hilfe der Referenz-Messung eine Abbildungsposition der Störstrukturen dynamisch ermittelt werden.

Dabei können in solchen Implementierungen unterschiedlichste Techniken zum Durchführen der Trennung der Abbildung des Messobjekts von den Störstrukturen eingesetzt werden. Beispielsweise könnten die Störstrukturen aus den verschiedenen Bildern der Vielzahl von Bildern entfernt werden. Dazu könnte zum Beispiel wiederum eine Bildkachelung eingesetzt werden. Dann wäre es möglich, dass solche Bildkacheln verworfen werden, welche die Störstrukturen beinhalten. Solche Kacheln könnten beispielsweise gelöscht oder bei der Auswertung ignoriert werden oder mit einem Faktor gedämpft werden oder mit einem geeigneten Wert ersetzt werden.

In einem weiteren Beispiel wäre es wiederum möglich, dass das Verfahren weiterhin das Durchführen einer Korrelation der Vielzahl von Bildern umfasst. Dann könnten in dieser Korrelation solche Datenpunkte verworfen oder ignoriert werden, welche in den Störstrukturen begründet sind. Beispielsweise wäre es in diesem Zusammenhang möglich, dass auch eine Korrelation der Vielzahl von Referenzbildern durchgeführt wird. Dann könnte die Korrelation des mindestens einen Bilds mit der Korrelation der Vielzahl von Referenzbildern verglichen werden: die Störstrukturen können anschließend basierend auf diesem Vergleichen erkannt werden. Beispielsweise kann die Korrelation der Vielzahl von Bildern ein Korrelationsmaximum aufweisen, welches durch das Messobjekt verursacht ist, nämlich insbesondere durch die Objektverschiebung des Messobjekts. Andererseits wäre es auch möglich, dass die Korrelation der Vielzahl von Referenzbildern ein Korrelationsmaximum aufweist, welches durch die Störstrukturen verursacht ist.

Dann ist es möglich, dass das mit den Störstrukturen assoziierte Korrelationsmaximum zu einem gewissen Grad auch in der Korrelation der Vielzahl von Bildern beinhaltet ist; durch das Vergleichen der Korrelation der Vielzahl von Bildern mit der Korrelation der Vielzahl von Referenzbildern wäre es möglich, eine entsprechende Trennung zu implementieren. Oftmals kann das Korrelationsmaximum, das mit den Störstrukturen assoziiert ist, einen besonders großen Signalwert aufweisen, zum Beispiel insbesondere im Vergleich mit einem Korrelationsmaximum, das mit dem Messobjekt assoziiert ist.

Es wäre etwa möglich, dass das Erfassen der Vielzahl von Bildern bei der Vielzahl von winkelvariablen Beleuchtungsgeometrien sowie das zugehörige Einstellen der Z-Position für eine Vielzahl von Iterationen wiederholt durchgeführt wird. Dies bedeutet, dass die Z-Position über die Vielzahl von Iterationen wiederholt verändert werden kann. Dies kann z.B. für Autofokus-Tracking-Anwendungen verwendet werden. In einem solchen Beispiel wäre es möglich, dass die Vielzahl von Referenzbildern für eine nachfolgende Iteration der Vielzahl von Iterationen basierend auf dem mindestens einen Bild einer oder mehrerer vorangehenden Iteration der Vielzahl von Iterationen erhalten wird. Dies bedeutet in anderen Worten, dass die Messbilder von früheren Iteration(en) als Referenzbilder späterer Iteration(en) verwendet werden können. Beispielsweise könnte - bei Verwendung von Korrelationen zur Bestimmung der Objektverschiebung, wie obenstehend schon beschrieben - nach Festlegung der gewünschten Fokuslage der Verlauf der Korrelation als Referenz verwendet werden. Es können Veränderungen in der Korrelation berücksichtigt werden, indem diese Veränderungen im Rahmen des Vergleichens der Korrelation des mindestens einen Bilds mit der Korrelation der Vielzahl von Referenzbildern berücksichtigt werden. Eine entsprechende Hintergrundkorrektur kann angewendet werden. Dadurch kann es entbehrlich sein, die (Langzeit-) Messung mit mehreren Iterationen durch dedizierte Kalibrationsphasen zu unterbrechen. Dies ermöglicht eine besonders große Zeitauflösung der Langzeit-Messung.

In den verschiedenen hierin beschriebenen Beispielen kann also eine hohe Robustheit für eine Messung mit mehreren Iterationen bereitgestellt werden. Ein solcher Effekt wird auch durch das nachfolgend beschriebene Verfahren erreicht.

Ein Verfahren zum Betreiben eines Mikroskops umfasst, für jede Iteration einer Vielzahl von Iterationen: Erfassen von mindestens einem Bild bei einer Vielzahl von winkelvariablen Beleuchtungsgeometrien, sowie Erkennen von gegenüber einer Veränderung der winkelvariablen Beleuchtungsgeometrie veränderlichen Anteilen in dem mindestens einen Bild als Objektverschiebung eines Messobjekts. Für jede Iteration umfasst das Verfahren weiterhin das Bestimmen einer Defokusposition des Messobjekts basierend auf der Objektverschiebung, sowie, basierend auf der Defokusposition, das Einstellen einer Z-Position einer Probenbühne des Mikroskops. Dabei umfasst das Verfahren weiterhin das Anpassen der Vielzahl von winkelvariablen Beleuchtungsgeometrien zwischen aufeinanderfolgenden Iteration.

Durch das Vorsehen der Vielzahl von Iterationen kann also die Z-Position wiederholt angepasst werden. Dadurch können Autofokus-Tracking-Anwendungen, beispielsweise für bewegte Messobjekte, realisiert werden. Eine Wiederholrate der mehreren Iterationen könnte im Allgemeinen im Bereich von kHz bis Hz oder 0,1 Hz liegen. Die Messdauer kann z.B. im Bereich von Minuten, Stunden oder Tagen liegen.

Die Beleuchtungsgeometrie kann im Allgemeinen für jede Iteration angepasst werden - oder aber nur für jede zweite oder dritte Iteration, oder in unregelmäßigen Abständen in Abhängigkeit von einem Auslösekriterium, etc..

Dabei kann durch das Anpassen der Beleuchtungsgeometrien von Iteration zu Iteration die Genauigkeit und/oder die Robustheit, mit der die Objektverschiebung erkannt werden kann, erhöht werden. Insbesondere können systematische Ungenauigkeiten durch das Verwenden eines statischen Satzes von Beleuchtungsgeometrien über die verschiedenen Iterationen hinweg vermieden werden. Dies kann insbesondere im Zusammenhang mit Langzeit-Messungen hilfreich sein. In anderen Worten kann also eine adaptive oder flexible Verwendung unterschiedlicher Beleuchtungsgeometrien erfolgen. Die Kombination unterschiedlicher Beleuchtungsgeometrien könnte zum Beispiel eine besonders hohe Robustheit ermöglichen.

Nachfolgend wird ein Beispiel für systematische Ungenauigkeiten gegeben, die aus der Verwendung eines statischen Satzes von Beleuchtungsgeometrien resultieren können. Z.B. könnte eine Autofokus-Anwendung mit Tracking für ein optisches Gitter eingesetzt werden. Das optische Gitter kann entlang einer Achse ausgerichtet sein. Hier kann die Variation der Beleuchtungsgeometrie entlang dieser Achse keinen signifikanten Kontrast bereitstellen, quer dazu aber einen hohe Kontrast. Andererseits darf die durch die Verwendung unterschiedlicher Beleuchtungsrichtungen induzierte Verschiebung der Abbildungsposition nicht der Gitterperiode entsprechen. Deshalb kann die Anpassung der Beleuchtungsgeometrie in einem solchen Fall erstrebenswert sein, sowohl hinsichtlich Richtung, als auch Stärke.

In einem Beispiel könnte durch das Anpassen der Beleuchtungsgeometrien ein Fangbereich für das Erkennen der Objektverschiebung eingestellt werden. Sind zum Beispiel Beleuchtungswinkel der verwendeten Beleuchtungsgeometrien mit einem kleinen Winkel zur optischen Achse dimensioniert, so entspricht dies typischerweise einem großen Fangbereich für die erkennbare Objektverschiebung. Dies liegt daran, dass auch für vergleichsweise große Defokuspositionen des Messobjekts noch eine vergleichsweise kleine Objektverschiebung erhalten wird.

Als allgemeine Regel kann nämlich eine größere (kleinere) Objektverschiebung erhalten werden für einen größeren (kleineren) verwendeten Beleuchtungswinkel, den die verwendeten Beleuchtungsrichtungen mit der optischen Achse einschließen, sowie für größere (kleinere) Defokuspositionen des Messobjekts.

Deshalb führen im Allgemeinen umgekehrt größere Winkel, die von den Beleuchtungswinkeln der verwendeten Beleuchtungsgeometrien mit der optischen Achse eingeschlossen werden, zu einem reduzierten Fangbereich, innerhalb dessen die Objektverschiebung erkennbar ist. Andererseits resultiert ein solches Szenario in einer erhöhten Auflösung bei der Bestimmung der Z-Position, weil pro Längeneinheit der Defokusposition eine größere Objektverschiebung vorliegt.

Diese Erkenntnisse können im Zusammenhang mit einer vorteilhaften Strategie in der Anpassung der Vielzahl von winkelvariablen Beleuchtungsgeometrien als Funktion der Iteration ausgenutzt werden. Beispielsweise könnte nämlich die Vielzahl von winkelvariablen Beleuchtungsgeometrien so verändert werden, dass eine Stärke der Objektverschiebung pro Längeneinheit der Defokusposition verändert wird. Gemäß den obenstehend ausgeführten Grundsätzen kann dies durch eine Tendenz zunehmender oder abnehmender Beleuchtungswinkel erreicht werden.

In anderen Worten kann also die Vielzahl von winkelvariablen Beleuchtungsgeometrien so verändert werden, dass der Fangbereich verändert wird. Nimmt nämlich beispielsweise die Stärke der Objektverschiebung pro Längeneinheit der Defokusposition einen bestimmten Wert an, so können Objektverschiebungen nur bis zu einer bestimmten Schwellenwert-Defokusposition - die dem Fangbereich entspricht - erkannt werden: größere Defokuspositionen können nicht mehr auf die sensitive Fläche des Detektors abgebildet werden bzw. werden von der Detektor-Apparatur blockiert.

Zum Beispiel könnte die verwendete Strategie beinhalten, dass die Stärke der Objektverschiebung pro Längeneinheit der Defokusposition für spätere Iterationen verstärkt wird. Dies bedeutet also, dass für spätere Iterationen der Fangbereich reduziert wird. Ein reduzierter Fangbereich resultiert aber, wie obenstehend beschrieben, gleichzeitig in einer erhöhten Auflösung. In einem solchen Ansatz könnte also zunächst eine grobe Bestimmung der Defokusposition mit großem Fangbereich erfolgen; anschließend könnte dann eine feinere und höher aufgelöste Bestimmung der Defokusposition mit eingeschränktem Fangbereich erfolgen. Dies ermöglicht es, die Abwägungssituation zwischen Fangbereich und Auflösung gezielt und Iterations-abhängig aufzulösen.

In weiteren Beispielen könnte die Vielzahl von winkelvariablen Beleuchtungsgeometrien derart verändert werden, dass eine Richtung der Objektverschiebung verändert wird. Beispielsweise könnten paarweise solche Lichtquellen des Beleuchtungsmoduls zur Implementierung von Beleuchtungsrichtungen der zugehörigen Beleuchtungsgeometrien verwendet werden, deren Verbindungsgeraden unterschiedliche Orientierungen aufweisen. Es könnten also im Allgemeinen von Iteration zu Iteration unterschiedliche Beleuchtungswinkel verwendet werden.

Eine solche Veränderung der Orientierung der verwendeten Beleuchtungsgeometrien ermöglicht es, Störstrukturen zu reduzieren, die auf der Selbstähnlichkeit des Messobjekts basieren. Beispielsweise könnte nämlich das Messobjekt bestimmte periodische Strukturen aufweisen, was zum Beispiel insbesondere bei technischen Messobjekten, beispielsweise Halbleiter-Topographien, etc. beobachtet werden kann. Eine solche Ortsraumperiodizität des Messobjekts wird bei der Anpassung der Vielzahl von winkelvariablen Beleuchtungsgeometrien nicht verändert: gleichzeitig kann durch eine Rotation oder anderweitige Veränderung der Richtung der Objektverschiebung die 2-D Korrelation rotiert bzw. verändert werden. Damit ist es möglich, robust zwischen Störstrukturen aufgrund der Periodizität des Messobjekts einerseits und der Objektverschiebung aufgrund der winkelaufgelösten Beleuchtungsgeometrien andererseits, zum Beispiel im Zusammenhang mit einer Korrelation, zu trennen. Damit kann die Z-Position der Probenbühne besonders robust eingestellt werden.

Verschiedene der hierin beschriebenen Techniken beruhen auf einer zuverlässigen Bestimmung der Defokusposition. Voranstehend wurden Techniken beschrieben, mit denen die Objektverschiebung robust erkannt werden kann. Die Objektverschiebung wird dann beim Bestimmen der Defokusposition berücksichtigt - weswegen auch die Defokusposition von der robusten Bestimmung der Objektverschiebung profitieren kann.

Ferner ist es aber möglich, dass die Defokusposition nicht lediglich auf der Objektverschiebung basierend bestimmt wird. Vielmehr können noch andere Größen berücksichtigt werden. Beispielsweise kann es erforderlich sein, ein oder mehrere optische Systemparameter des Mikroskops beim Bestimmen der Defokusposition zu berücksichtigen.

Es wurde beobachtet, dass auch Werte der Systemparameter nur ungenau oder fehlerhaft bekannt sein können. In einem solchen Fall besteht die Gefahr einer systematischen Verfälschung bei der Bestimmung der Defokusposition. Die nachfolgend beschriebenen Techniken ermöglichen es, die Defokusposition auch hinsichtlich Unsicherheiten im Zusammenhang mit ein oder mehreren optischen Systemparametern zuverlässig zu bestimmen.

Ein Verfahren zum Betreiben eines Mikroskops umfasst, für jede Iteration einer Vielzahl von Iterationen: Erfassen von mindestens einem Bild bei einer Vielzahl von winkelvariablen Beleuchtungsgeometrien, sowie Erkennen von gegenüber einer Veränderung der winkelvariablen Beleuchtungsgeometrie veränderlichen Anteilen in dem mindestens einen Bild als Objektverschiebung eines Messobjekts. Für jede Iteration umfasst das Verfahren weiterhin das Bestimmen einer Defokusposition des Messobjekts basierend auf der Objektverschiebung, sowie, basierend auf der Defokusposition, das Einstellen einer Z-Position einer Probenbühne des Mikroskops. Dabei umfasst das Verfahren weiterhin das Bestimmen einer Änderung der Defokusposition des Messobjekts zwischen zwei Iterationen der Vielzahl von Iterationen, basierend auf den erkannten Objektverschiebungen für diese zwei Iterationen. Außerdem umfasst das Verfahren das Bestimmen einer Änderung der Z-Position der Probenbühne zwischen den zwei Iterationen basierend auf Steuerdaten der Probenbühne des Mikroskops. Das Verfahren umfasst ferner auch das Vergleichen der Änderung der Defokusposition mit der Änderung der Z-Position.

Es ist also möglich, dass die Z-Position für die Vielzahl von Iterationen wiederholt eingestellt wird. Dies kann beispielsweise eine Autofokus-Tracking-Anwendung ermöglichen. Eine Langzeit-Messung wird ermöglicht. Auch bewegliche Proben können robust verfolgt werden.

Durch das Vergleichen der Änderung der Defokusposition mit der Änderung der Z-Position zwischen den zwei Iterationen kann ein Fehlerzustand des Systems erkannt werden. Insbesondere kann nämlich bei einem fehlerfrei funktionierenden System die Änderung der Z-Position übereinstimmen bzw. jedenfalls korrelieren mit der Änderung der Defokusposition. Verändert sich die Defokusposition zum Beispiel weniger stark oder stärker als die Z-Position, so kann davon ausgegangen werden, dass ein Fehlerzustand eine genaue Autofokussierung verhindert. Entsprechende Maßnahmen können ergriffen werden. Durch solche Techniken kann also eine Selbstkonsistenz beim Bestimmen der Defokusposition einerseits und dem Einstellen der Z-Position andererseits verifiziert werden. Ein Selbsttest wird möglich. Dadurch können z.B. systematische Fehler im Zusammenhang mit Systemparametern erkannt werden.

Dabei könnten in den unterschiedlichen hierin beschriebenen Techniken beim Erkennen eines Fehlerzustands unterschiedliche Maßnahmen ergriffen werden. In einer einfachen Implementierung könnte beispielsweise eine Langzeit-Messung abgebrochen werden und ein entsprechender Fehlergrund ausgegeben oder protokolliert werden. Es könnte alternativ oder zusätzlich auch eine Warnung über eine Benutzerschnittstelle an einen Benutzer ausgegeben werden.

In weiteren Beispielen wäre es aber auch möglich, dass eine selbstkonsistente Anpassung der verwendeten Techniken erfolgt, sodass kein Abbruch der Messung erforderlich wird. Beispielsweise könnte nämlich die Defokusposition des Messobjekts weiterhin basierend auf mindestens einem optischen Systemparameter des Mikroskops bestimmt werden. Beispielsweise könnte der optische Systemparameter eine optische Eigenschaft einer Abbildungsoptik etc. des Mikroskops beschreiben. Beispielsweise könnte der mindestens eine optische Systemparameter aus folgender Gruppe ausgewählt sein: Vergrößerung; und Abstand eines Beleuchtungsmoduls des Mikroskops zu der Probenbühne.

Solchen Techniken liegt die Erkenntnis zugrunde, dass bei Unsicherheiten im Zusammenhang mit dem mindestens einen optischen Systemparameter systematische Fehler bei der Bestimmung der Defokusposition resultieren können. Solche systematische Fehler können mittels der hierin beschriebenen Techniken reduziert werden, indem ein selbstkonsistentes Anpassen des mindestens einen optischen Systemparameters basierend auf dem Vergleichen der Änderung der Defokusposition mit der Änderung der Z-Position erfolgt. Beispielsweise könnte nämlich der mindestens eine optische Systemparameter derart eingestellt werden, dass die gemessene Änderung der Defokusposition übereinstimmt mit der Änderung der Z-Position der Probenbühne. Dann kann für ein oder mehrere nachfolgende Iterationen eine besonders hohe Genauigkeit im Zusammenhang mit dem Bestimmen der Defokusposition bzw. mit dem Einstellen der Z-Position erreicht werden, unter Verwendung des angepassten optischen Systemparameters.

Solche Techniken beruhen ferner auf der Erkenntnis, dass die Funktionsweise der Autofokus-Anwendung durch zwei unabhängige Messwerte überprüft werden kann: nämlich einerseits durch das Messen der Veränderung der Defokusposition anhand der erkannten Objektverschiebung, d. h. anhand der Vielzahl von Bildern - und andererseits anhand der Steuerdaten der Probenbühne. Beispielsweise könnte die Probenbühne einen Positionssensor aufweisen, der eingerichtet ist, um die Steuerdaten auszugeben. Alternativ oder zusätzlich wäre es auch möglich, dass die Probenbühne einen Aktuator aufweist, der das Einstellen der Probenbühne motorisiert ermöglicht. Dann wäre es möglich, dass die Steuerdaten vom Aktuator erhalten werden. Die Steuerdaten können z.B. ein Steuersignal für den Aktuator implementieren.

Die voranstehend beschriebenen Aspekte und Beispiele können miteinander kombiniert werden. Beispielsweise wäre es möglich, Techniken, die auf a-priori Wissen beruhen, zu kombinieren mit Techniken, die auf der Verwendung von Referenzbildern beruhen. Beispielsweise wäre es möglich, die beschriebenen Techniken im Zusammenhang mit dem iterativen Durchführen der Messung zu kombinieren mit den Techniken, welche die Trennung der Störstrukturen von der Abbildung des Messobjekts zum Beispiel auf Grundlage von a-priori Wissen und/oder Referenzbildern ermöglichen. Dabei können die auf der iterativen Durchführung der Messung beruhenden Techniken ein selbstkonsistentes Überprüfen und optional Anpassen von einem oder mehreren optischen Systemparametern von Iteration zu Iteration beinhalten. Die auf der iterativen Durchführung der Messung beruhenden Techniken können auch ein Anpassen der verwendeten Beleuchtungsgeometrien von Iteration zu Iteration beinhalten. Alle solche Maßnahmen steigern im Allgemeinen die Robustheit und/oder die Genauigkeit, mit der die Z-Position der Probenbühne - beispielsweise im Zusammenhang mit einer Autofokus-Anwendung - eingestellt werden kann.

KURZE BESCHREIBUNG DER FIGUREN

FIG. 1 ist eine schematische Ansicht eines Mikroskops mit einem Beleuchtungsmodul für die winkelvariable Beleuchtung gemäß verschiedener Techniken.

FIG. 2 ist ein Flussdiagramm eines beispielhaften Verfahrens.

FIG. 3 ist eine schematische Ansicht des Beleuchtungsmoduls gemäß verschiedener Beispiele.

FIG. 4 illustriert schematisch eine Beleuchtungsgeometrie für die winkelvariable Beleuchtung gemäß verschiedener Beispiele.

FIG. 5 illustriert schematisch eine Objektverschiebung eines Messobjekts bei der Verwendung unterschiedlicher Beleuchtungsgeometrien.

FIG. 6 illustriert schematisch die Verwendung von zwei linienförmigen Beleuchtungsgeometrien gemäß verschiedener Beispiele.

FIG. 7 illustriert schematisch eine 2-D Korrelation von Bildern, die mit den Beleuchtungsgeometrien aus FIG. 6 erfasst wurden.

FIG. 8 illustriert schematisch die Verwendung von zwei linienförmigen Beleuchtungsgeometrien gemäß verschiedener Beispiele.

FIG. 9 illustriert schematisch eine 2-D Korrelation von Bildern, die mit den Beleuchtungsgeometrien aus FIG. 8 erfasst wurden.

FIG. 10 illustriert schematisch eine 2-D Korrelation von Bildern, die mit den Beleuchtungsgeometrien aus FIG. 8 erfasst wurden.

FIG. 11 illustriert schematisch eine 2-D Korrelation von Bildern, die mit den Beleuchtungsgeometrien aus FIG. 8 erfasst wurden, wobei FIG. 11 auch das Überlagern von Datenpunkten der 2-D Korrelation illustriert.

FIG. 12A illustriert weitere Details der überlagerten Datenpunkte der 2-D Korrelation aus FIG. 11.

FIG. 12B illustriert schematisch eine 2-D Korrelation von Bildern, die mit den Beleuchtungsgeometrien aus FIG. 8 erfasst wurden, wobei FIG. 12B auch einen Suchbereich der 2-D Korrelation illustriert.

FIG. 13 illustriert schematisch eine Bildkachelung eines Bilds gemäß verschiedener Beispiele.

FIG. 14 illustriert schematisch eine Störstruktur, die einem gegenüber einer Variation der Z-Position einer Probenbühne des Mikroskops unveränderlichen Anteil eines Bilds entspricht.

FIG. 15 illustriert schematisch eine Abbildung eines Messobjekts, das einem gegenüber einer Variation der Z-Position einer Probenbühne des Mikroskops veränderlichen Anteil eines Bilds entspricht.

FIG. 16 ist ein Flussdiagramm eines Verfahrens mit mehreren Iterationen gemäß verschiedener Beispiele.

DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Funktionale Einheiten können als Hardware, Software oder eine Kombination aus Hardware und Software implementiert werden.

Nachfolgend werden verschiedene Techniken in Bezug auf die winkelvariable Beleuchtung beschrieben. Bei der winkelvariablen Beleuchtung wird ein Messobjekt mit unterschiedlichen Beleuchtungsgeometrien beleuchtet. Beispielsweise können die unterschiedlichen Beleuchtungsgeometrien unterschiedliche Beleuchtungswinkel bzw. Beleuchtungsrichtungen umfassen. Dadurch verändert sich die Abbildung des Messobjekts in den entsprechenden Bildern. Beispielsweise kann der Ort der Abbildung des Messobjekts variieren, d. h. es kann eine Objektverschiebung von Beleuchtungsgeometrie zu Beleuchtungsgeometrie bzw. von Bild zu Bild vorliegen. Dies kann im Rahmen einer digitalen Analyse ausgenutzt werden, um zusätzliche Informationen über das Messobjekt zu erhalten.

Ein Beispiel für eine solche digitale Analyse betrifft das Bestimmen der Anordnung des Messobjekts in Bezug auf das optische System, mit welchem die winkelaufgelöste Beleuchtung vorgenommen wird, typischerweise ein Mikroskop. Dabei kann die Anordnung des Messobjekts beispielsweise die Position des Messobjekts in Bezug auf die Fokusebene des optischen Systems bezeichnen, d. h. einen Abstand zwischen dem Messobjekt und der Fokusebene (Defokusposition). Die Defokusposition kann beispielsweise entlang einer Richtung definiert sein, die sich parallel zur optischen Hauptachse des optischen Systems erstreckt; diese Richtung wird typischerweise als Z-Richtung bezeichnet. Alternativ oder zusätzlich könnte die Anordnung des Messobjekts auch eine Ausdehnung des Messobjekts parallel zur Z-Richtung bezeichnen, also eine Dicke des Messobjekts. Beispielsweise werden im Bereich der Biotechnologie häufiger Messobjekte untersucht, die dreidimensionale Körper aufweisen und deshalb auch eine signifikante Ausdehnung entlang der Z-Richtung aufweisen können.

Mittels der hierin beschriebenen Techniken können insbesondere Autofokus-Anwendungen ermöglicht werden, die auf dem Bestimmen der Defokusposition beruhen. Im Zusammenhang mit den Autofokus-Anwendungen kann die Z-Position einer das Messobjekt fixierenden Probenbühne eingestellt werden. Dadurch wird die Defokusposition verändert.

Dabei kann in den verschiedenen hierin beschriebenen Beispielen das Einstellen der Z-Position durch Bereitstellen einer geeigneten Anweisung über eine Benutzerschnittstelle an einen Benutzer erfolgen. Zum Beispiel könnte an einen Benutzer eine Instruktion über die Benutzerschnittstelle ausgegeben werden, um welchen Betrag die Z-Position der Probenbühne zu verändern ist. Beispielsweise könnte ein Verstellweg der Z-Position, der einem Benutzer zugänglich gemacht wird, in Abhängigkeit von der Defokusposition begrenzt werden. Dazu könnte die Benutzerschnittstelle geeignet angesteuert werden. In anderen Beispielen wäre es auch möglich, dass das Einstellen der Z-Position automatisiert erfolgt. Dazu kann eine motorisierte Probenbühne verwendet werden. Ein geeigneter Aktuator kann entsprechend angesteuert werden, mit einem entsprechenden Steuersignal.

Beispielsweise können solche Techniken dazu verwendet werden, um Langzeit-Messungen zu stabilisieren. Langzeit-Messungen können eine Messdauer aufweisen, während welcher sich die Form und/oder die Ausdehnung des Messobjekts verändert. Dies wäre zum Beispiel bei Zeitraffer-Messungen der Fall. Dies kann beispielsweise bei mobilen Proben in einer 3-D Matrix der Fall sein. Beispielsweise könnten einzelne Bestandteile des Messobjekts eine hohe Mobilität aufweisen. Außerdem können Drifts, zum Beispiel durch Schwankungen der Temperatur oder externe Vibrationen, kompensiert werden. Autofokus-Tracking ist möglich.

Mittels der hierin beschriebenen Techniken kann die Defokusposition mit einer erhöhten Sensitivität bestimmt werden. Dies ermöglicht robuste Autofokus-Anwendungen auch im Zusammenhang mit kontrastarmen Messobjekten, beispielsweise biologischen Proben.

Mittels der hierin beschriebenen Techniken können Störstrukturen in den erfassten Bildern identifiziert werden. Mittels der hierin beschriebenen Techniken kann es möglich sein, die Abbildung des Messobjekts zu trennen von den Störstrukturen. Dadurch kann ein verfälschender Einfluss der Störstrukturen auf das Bestimmen der Defokusposition vermieden werden oder jedenfalls reduziert werden. Der Fangbereich für das Bestimmen der Defokusposition kann erhöht werden.

Mittels der hierin beschriebenen Techniken kann die Komplexität der digitalen Analyse reduziert werden. Beispielsweise kann es möglich werden, anstatt einer 2-D Analyse einer Korrelation eine 1-D Analyse der Korrelation vorzunehmen. Alternativ oder zusätzlich können ein oder mehrere Steuerparameter des optischen Systems iterativ und selbstkonsistent angepasst werden und eine dedizierte Kalibrierungsphase kann daher entfallen.

In verschiedenen Beispielen wird die Objektverschiebung des Messobjekts durch Vergleichen einer Vielzahl von Bildern miteinander erkannt. Dabei können unterschiedliche Techniken im Zusammenhang mit dem Vergleichen angewendet werden. Beispielsweise könnten Bild-Registrierungen für die verschiedenen Bilder der Vielzahl von Bilder vorgenommen werden, um eine Abbildungsposition des Messobjekts in den unterschiedlichen Bildern zu erkennen. Dann können die Abbildungspositionen miteinander verglichen werden. In anderen Beispielen wäre es auch möglich, dass eine Korrelation zwischen zwei oder mehr Bildern der Vielzahl von Bildern durchgeführt wird. Die Korrelation kann im Allgemeinen für gesamte Bilder oder auch nur für Teilbereiche von Bildern durchgeführt werden, wobei bei unterschiedlichen Bildern nicht notwendigerweise identische Teilbereiche berücksichtigt werden müssen - insbesondere bei ausgedehnten Messobjekten und/oder bei großen Defokussierungen. Die Korrelation kann es ermöglichen, einen Zusammenhang zwischen Abbildungen des Messobjekts bei unterschiedlichen Beleuchtungsgeometrien zu quantifizieren. Insbesondere kann es mittels der Korrelation möglich sein, Abstände bzw. Verschiebungen zwischen den Abbildungen des Messobjekts unter unterschiedlichen Beleuchtungsgeometrien zu bestimmen. Beispielsweise könnte es mittels der Korrelation möglich sein, diejenige translatorische Verschiebung zu identifizieren, die eine erste Abbildung des Messobjekts bei einer ersten Beleuchtungsgeometrie überführt in eine zweite Abbildung des Messobjekts bei einer zweiten Beleuchtungsgeometrie. Dies wird als Objektverschiebung des Messobjekts bezeichnet.

In manchen Beispielen könnte die erste Abbildung des Messobjekts bei der ersten Beleuchtungsgeometrie mit einem ersten Bild assoziiert sein und die zweite Abbildung des Messobjekts bei der zweiten Beleuchtungsrichtung mit einem zweiten Bild assoziiert sein. In einem solchen Fall ergäbe sich eine beispielhafte Implementierung der Korrelation aus folgender Gleichung:

$$K(T) = \sum_n x(n)y(n+T). \qquad (1)$$

Dabei kann der Wert der Korrelation für verschiedene Verschiebungen $T$ zwischen dem ersten Bild $x$ und dem zweiten Bild $y$ bestimmt werden. Ein Maximum der Korrelation bezeichnet dasjenige $T \equiv T_0$, bei welchem das erste Bild und das entsprechend verschobene zweite Bild eine besonders große Ähnlichkeit aufweisen. Deshalb ist $T_0$ indikativ für den Abstand zwischen den Abbildungen des Messobjekts bei unterschiedlichen Beleuchtungsgeometrien, d.h. die Objektverschiebung, $n$ indiziert die Bildpunkte. In Gleichung 1 ist vereinfacht eine 1-D Korrelation beschrieben, wobei im Allgemeinen auch eine 2-D Korrelation durchgeführt werden könnte. Weil unterschiedliche Bilder verglichen werden, wird diese Art der Korrelation auch manchmal als Kreuzkorrelation bezeichnet. In anderen Beispielen kann auch eine Autokorrelation von einem einzelnen Bild durchgeführt werden; wobei dabei mehrere Beleuchtungsgeometrien eine Überlagerung mehrerer Abbildungen des Messobjekts bewirken können. Die Position des Maximums der Korrelation kann anschließend verwendet werden, um die Defokusposition des Messobjekts zu bestimmen.

Beispielsweise könnte der Abstand zwischen dem Messobjekts und der Fokusebene auch durch die folgende Gleichung erhalten werden:

$$\Delta z = T_0 \frac{\cos\alpha \cdot \cos\beta}{\sin(\alpha+\beta)}, \qquad (2)$$

wobei $\alpha$ und $\beta$ jeweils die Winkel zwischen den Beleuchtungsrichtungen und der optischen Hauptachse bezeichnen, d.h. Beleuchtungswinkel beschreiben. Diese Winkel sind gegeben durch entsprechende optische Systemparameter, insbesondere z.B. einem Abstand des Beleuchtungsmoduls von der Probenbühne und der Anordnung der Lichtquellen. Entsprechende Techniken sind im Grundsatz aus DE 10 2014 109 687 A1 bekannt.

Dabei bezeichnet Gleichung 2 lediglich eine beispielhafte Implementierung einer entsprechenden Berechnung. Es könnten auch andere Formulierungen von Gleichung 2 verwendet werden, im Allgemeinen

$$\Delta z = \Delta z(S, T_0) \qquad\qquad (3)$$

wobei S ein oder mehrere Systemparameter bezeichnet.

Alternativ oder zusätzlich zur Position des Maximums der Korrelation könnten auch andere Charakteristiken der Korrelation zum Bestimmen der Anordnung des Messobjekts in Bezug auf die Fokusebene verwendet werden. Ein Beispiel umfasst die Breite des Maximums der Korrelation. Dadurch wäre es zum Beispiel möglich - durch entsprechende Anwendung der Gleichung 2 -, auf die Ausdehnung des Messobjekts in Bezug auf die Fokusebene zurück zu schließen.

Solche oben beschriebenen Techniken sind besonders flexibel und können je nach gewünschter Implementierung angepasst werden. In einem ersten Beispiel könnte ein einzelnes Bild aufgenommen werden, wobei dabei zeitparallel zwei unterschiedliche Beleuchtungsgeometrien aktiviert sind. In diesem ersten Beispiel kann die Korrelation auch als Autokorrelation bezeichnet werden. Dabei entspricht ein Abstand zwischen Maxima der Autokorrelation der Defokusposition. Es könnten beispielsweise auch die Position eines Maximums der Autokorrelation gegenüber null betrachtet werden. In einem weiteren Beispiel könnte ein einzelnes Bild aufgenommen werden, wobei dabei drei unterschiedliche Beleuchtungsgeometrien aktiviert sind. Darum könnte eine Autokorrelation verwendet werden, wobei das Maximum der Autokorrelation der Defokusposition entspricht. In einem dritten Beispiel könnten beispielsweise zeitsequentiell oder bei unterschiedlichen Wellenlängen und/oder Polarisationen des Lichts mehrere Bilder aufgenommen werden, wobei jedes Bild jeweils eine Abbildung des Messobjekts unter einer einzelnen Beleuchtungsgeometrie beinhaltet. In einem solchen Beispiel kann die Korrelation als Kreuzkorrelation bezeichnet werden. Wiederum entspricht das Maximum der Korrelation der Defokusposition.

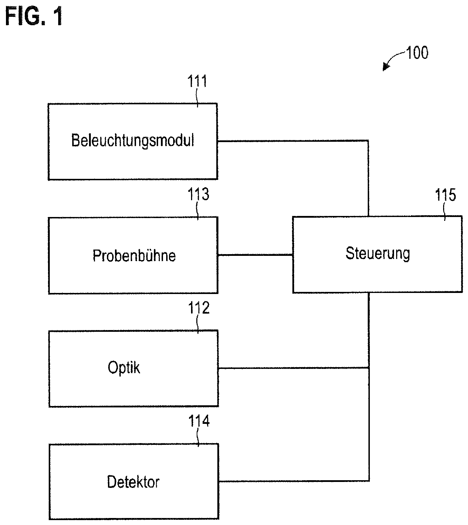

FIG. 1 illustriert ein beispielhaftes optisches System 100. Beispielsweise könnte das optische System 100 ein Mikroskop implementieren, zum Beispiel ein Lichtmikroskop in Durchlichtgeometrie oder aber in Auflichtgeometrie.

Mittels des Mikroskops 100 kann es möglich sein, kleine Strukturen eines auf einer Probenbühne 113 fixierten Messobjekts bzw. Probenobjekts vergrößert darzustellen.

Das Mikroskop 100 umfasst dazu ein Beleuchtungsmodul 111. Das Beleuchtungsmodul 111 kann eingerichtet sein, um die Probenbühne 113 vollflächig zu beleuchten, jeweils mit unterschiedlichen Beleuchtungsgeometrien.

Außerdem umfasst das Mikroskop 100 eine Abbildungsoptik 112, die eingerichtet ist, um ein Abbild des Messobjekts auf einer Sensorfläche eines Detektors 114 zu erzeugen. Eine Detektorapertur kann eine Hellfeld-Bildgebung und/oder eine Dunkelfeld-Bildgebung ermöglichen, zum Beispiel je nach verwendeter Beleuchtungsgeometrie.

Im Beispiel der FIG. 1 ist das Beleuchtungsmodul 111 eingerichtet, um eine winkelvariable Beleuchtung des Messobjekts zu ermöglichen. Dies bedeutet, dass mittels des Beleuchtungsmoduls 111 unterschiedliche Beleuchtungsgeometrien des zur Beleuchtung des Messobjekts verwendeten Lichts implementiert werden können. Die unterschiedlichen Beleuchtungsgeometrien können jeweils eine oder mehrere Rückbeleuchtungsrichtungen bzw. Beleuchtungswinkel umfassen.

Dabei sind in den verschiedenen hierin beschriebenen Beispielen unterschiedliche Hardware-Implementierungen möglich, um die unterschiedlichen Beleuchtungsgeometrien bereitzustellen. Beispielsweise könnte das Beleuchtungsmodul 111 mehrere einstellbare Lichtquellen umfassen, die eingerichtet sind, um lokal Licht zu modifizieren und/oder zu erzeugen (in FIG. 1 sind die Lichtquelle nicht dargestellt).

Eine Steuerung 115 kann das Beleuchtungsmodul 111 bzw. die Lichtquellen ansteuern. Beispielsweise könnte die Steuerung 115 als Mikroprozessor oder Mikrocontroller implementiert sein. Alternativ oder zusätzlich könnte die Steuerung 115 beispielsweise einen FPGA oder ASIC umfassen. Die Steuerung 115 kann alternativ oder zusätzlich auch die Probenbühne 113, die Abbildungsoptik 112, und/oder den Detektor 114 ansteuern.

In manchen Beispielen ist es möglich, dass die Steuerung 115 in ein Gehäuse des Mikroskops 100 integriert ist. In anderen Beispielen wäre es aber auch möglich, dass die Steuerung 115 extern von der optischen Vorrichtung 100 vorgesehen ist. Beispielsweise könnte die Steuerung 115 durch ein entsprechendes Computerprogramm, das auf einem PC ausgeführt wird, implementiert sein.

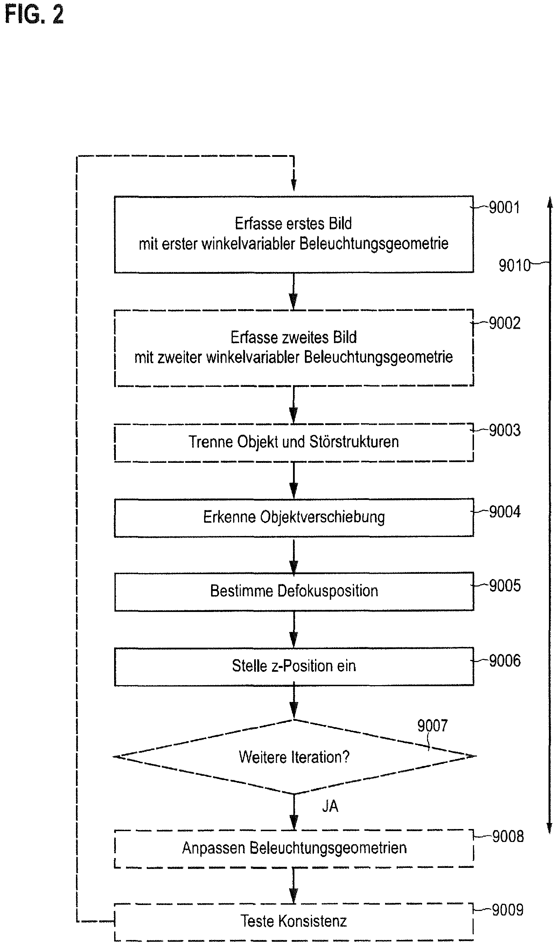

FIG. 2 ist ein Flussdiagramm eines beispielhaften Verfahrens. Beispielsweise könnte das Verfahren gemäß FIG. 2 von der Steuerung 115 des Mikroskops 100 aus FIG. 1 ausgeführt werden. In FIG. 2 sind optionale Blöcke mit gestrichelten Linien dargestellt.

In FIG. 2 werden mehrerer Iterationen 9010 nacheinander ausgeführt.

Zunächst erfolgt in Block 9001 das Erfassen eines ersten Bilds mit einer ersten winkelvariablen Beleuchtungsgeometrie. Beispielsweise könnte die erste winkelvariable Beleuchtungsgeometrie ein Linien-Muster der verwendeten Lichtquellen des Beleuchtungsmoduls implementieren.

Block 9001 kann beispielsweise durch das Ansteuern des Beleuchtungsmoduls und/oder des Detektors des Mikroskops implementiert werden.

Dann erfolgt in Block 9002 das Erfassen eines zweiten Bilds mit einer zweiten winkelvariablen Beleuchtungsgeometrie. Beispielsweise könnte die zweite winkelvariable Beleuchtungsgeometrie ein weiteres Linien-Muster der verwendeten Lichtquellen des Beleuchtungsmoduls implementieren.

Ein solches Linienmuster definiert typischerweise eine Vielzahl von Beleuchtungswinkeln gemäß den verschiedenen verwendeten Lichtquellen.

Anstatt in Block 9002 ein zweites Bild mit der zweiten winkelvariablen Beleuchtungsgeometrie zu erfassen, wäre es in manchen Beispielen auch möglich, dass in Block 9001 zwei Beleuchtungsgeometrien - beispielsweise das Linien-Muster und das weitere Linien-Muster - verwendet werden. Dann liegt eine Überlagerung in einem einzelnen Bild vor. Deshalb ist Block 9002 als optional gekennzeichnet.

Dann erfolgt in dem Block 9003 das Durchführen einer Trennung einer Abbildung des Messobjekts von Störstrukturen in dem mindestens einen Bild aus Blöcken 9001 sowie 9002.

Dabei wird diese Trennung basierend auf Steuerdaten durchgeführt werden, welche indikativ für a-priori Wissen sind.

Anschließend erfolgt in Block 9004 das Erkennen einer Objektverschiebung des Messobjekts, gegebenenfalls unter Berücksichtigung der Trennung. Dies bedeutet, dass beim Erkennen der Objektverschiebung Störstrukturen nicht oder nur in geringerem Maße berücksichtigt werden können. Dadurch kann sichergestellt werden, dass die Objektverschiebung aus der Defokusposition des Messobjekts resultiert und nicht ein von Störstrukturen bewirktes Artefakt darstellt.

In Block 9004 könnte eine 2-D Autokorrelation zwischen dem Bild aus Block 9001 durchgeführt werden. Es könnte auch eine 2-D Kreuzkorrelation zwischen den Bildern aus Blöcken 9001, 9002 durchgeführt werden. In anderen Beispielen könnte eine Bildregistrierung zwischen gleichen Merkmalen in den Bildern aus Blöcken 9001, 9002 durchgeführt werden, um die Objektverschiebung zu bestimmen.

In Block 9005 wird dann die Defokusposition des Messobjekts basierend auf der zuvor erkannten Objektverschiebung bestimmt.

In Block 9006 wird die Z-Position der Probenbühne des Mikroskops eingestellt, beispielsweise automatisch / motorisiert mittels eines Steuersignals oder auch teilautomatisch durch Ausgabe von Anweisungen über eine Benutzerschnittstelle.

Im Beispiel der FIG. 2 ist ein Szenario dargestellt, bei welchem das Erfassen des mindestens einen Bilds in Blöcken 9001 und 9002 bei der Vielzahl von winkelvariablen Beleuchtungsgeometrien, sowie das zugehörige Einstellen der Z-Position in Block 9006 - bzw. im Allgemeinen die Blöcke 9001-9006 - für eine Vielzahl von Iterationen 9010 wiederholt durchgeführt wird. Dazu wird in Block 9007 überprüft, ob eine weitere Iteration 9010 durchzuführen ist. Dazu können unterschiedlichste Abbruchkriterien berücksichtigt werden, zum Beispiel ein Zähler, ein Zeitgeber, etc..

Wenn eine weitere Iteration 9010 durchgeführt werden soll, so werden erneut 9001-9006 durchgeführt.

Optional könnte dabei in Block 9008 ein Anpassen der winkelvariablen Beleuchtungsgeometrien für die nachfolgende Iteration 9010 erfolgen. Beispielsweise könnte ein Anpassen derart erfolgen, dass eine Richtung der Objektverschiebung verändert wird. Es könnte aber auch eine Stärke der Objektverschiebung normiert auf die Defokusposition verändert werden. Beispielsweise könnte die Stärke der Objektverschiebung pro Längeneinheit der Defokusposition von Iteration zu Iteration 9010 verstärkt werden, um derart zunächst eine grobe Bestimmung der Defokusposition zusammen mit einer groben Einstellung der Z-Position zu ermöglichen, mit großem Fangbereich - und anschließend eine feine, hochaufgelöste Bestimmung der Defokusposition mit feiner Einstellung der Z-Position zu ermöglichen.

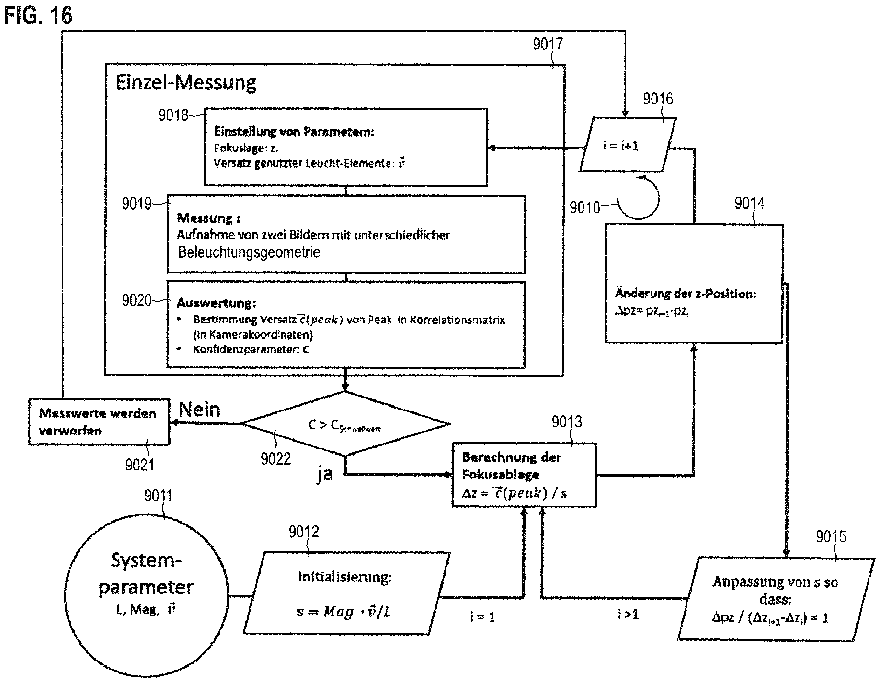

In Block 9009 erfolgt optional auch ein Testen auf Selbstkonsistenz der vorgenommenen Berechnungen und Anpassungen. Dabei können die in zwei vorausgehenden Iterationen erkannte Objektverschiebung aus Block 9004 einerseits und die Änderung der Z-Position in den entsprechenden Blöcken 9006 andererseits miteinander verglichen werden. Insbesondere kann überprüft werden, ob die Änderung der Z-Position in den Blöcken 9006 in einer erwartungsgemäßen Änderung der Objektverschiebung in Blöcken 9004 resultiert. Insbesondere kann z.B. basierend auf den erkannten Objektverschiebungen eine (tatsächliche) Änderung der Defokusposition bestimmt werden; diese kann verglichen werden mit der (erwarteten) Änderung der Defokusposition aufgrund der Änderung der Z-Position durch Einstellung mittels der Probenbühne. Bei Diskrepanzen kann ein selbstkonsistentes Anpassen eines Systemparameters des Mikroskops 100 erfolgen. Details im Zusammenhang mit einer solchen selbstkonsistenten Anpassung sind später im Zusammenhang mit FIG. 16 beschrieben.

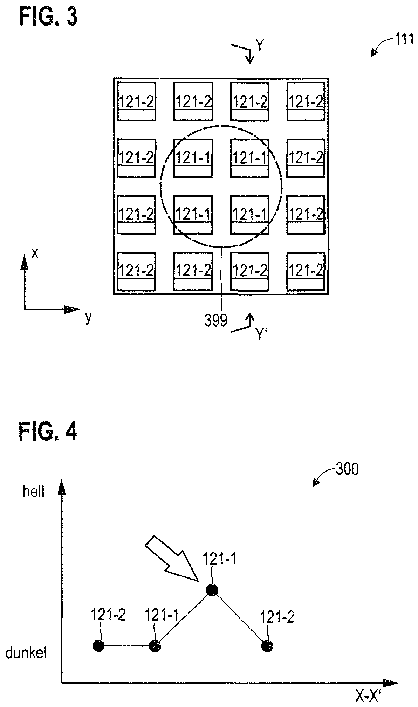

FIG. 3 illustriert Aspekte in Bezug auf das Beleuchtungsmodul 111. In FIG. 3 ist dargestellt, dass das Beleuchtungsmodul 111 eine Vielzahl von einstellbaren Lichtquellen 121-1, 121-2 in einer Matrixstruktur aufweist. Im Beispiel der FIG. 3 ist die Matrixstruktur als Gitterstruktur mit quadratischer Einheitszelle implementiert. Die Matrixstruktur ist dabei in einer Ebene senkrecht zur optischen Hauptachse des Mikroskops 100 orientiert (laterale Ebene; Ortsraumkoordinaten X, Y). Diese Ebene ist der Probenbühne zugewendet (die Probenbühne ist in FIG. 3 nicht dargestellt).

Anstatt einer Matrixstruktur wäre es in anderen Beispielen auch möglich, andere geometrischen Anordnungen der Lichtquellen 121-1, 121-2 zu verwenden, beispielsweise ringförmig, halbkreisförmig, etc. Im Allgemeinen könnten die Lichtquellen 121-1, 121-2 in einer Gitterstruktur angeordnet sein.

In einem Beispiel könnten die Lichtquellen 121-1, 121-2 als Leuchten, zum Beispiel als Leuchtdioden, implementiert sein. Dann wäre es beispielsweise möglich, dass unterschiedliche Leuchtdioden mit unterschiedlicher Lichtstärke Licht zur Beleuchtung des Messobjekts emittieren. Derart kann eine winkelvariable Beleuchtungsgeometrie implementiert werden. In einer weiteren Implementierung könnte das Beleuchtungsmodul 111 aber auch als räumlicher Lichtmodulator (engl. spatial light modulator; SLM) implementiert sein. Derart kann ortsaufgelöst ein Eingriff in einer Kondensorpupille vorgenommen werden, was eine direkte Auswirkung auf die Bildgebung haben kann.

In FIG. 3 ist auch eine doppelte Detektorapertur 399 der Abbildungsoptik 112 dargestellt. Diejenigen Lichtquellen 121-1, die innerhalb der doppelten Detektorapertur 399 - d. h. im Hellfeld - angeordnet sind, stellen die Hellfeld-Beleuchtung des Messobjekts bereit; diejenigen Lichtquellen 121-2, die außerhalb der doppelten Detektorapertur 399 - d. h. im Dunkelfeld - angeordnet sind, bilden die Dunkelfeld-Beleuchtung des Messobjekts.

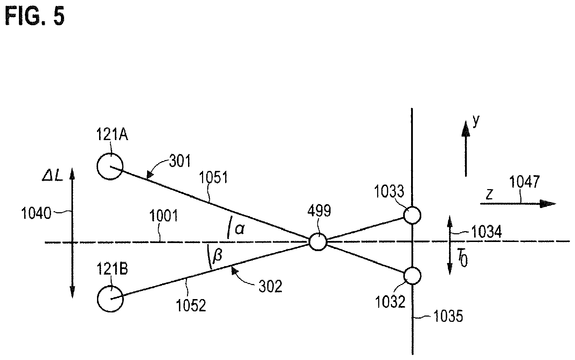

FIG. 4 illustriert Aspekte in Bezug auf eine beispielhafte Beleuchtungsgeometrie. In FIG. 4 ist die bereitgestellte Lichtstärke 301 für die verschiedenen Lichtquellen 121-1, 121-2 entlang der Achse X-X' aus FIG. 3 dargestellt. Die Beleuchtungsgeometrie 300 ist durch eine Abhängigkeit der Lichtstärke von der Position entlang der X-Achse charakterisiert; deshalb wird eine winkelvariable Beleuchtung durch die Beleuchtungsgeometrie 300 bereitgestellt. Das Licht fällt insbesondere unter einem Winkel, der mit der aktivierten Lichtquelle 121-1 (markiert durch einen Pfeil in FIG. 4) assoziiert wird, auf das Messobjekt ein. Die Beleuchtungsgeometrie 300 umfasst also eine entsprechende Beleuchtungsrichtung. Weitere Details im Zusammenhang mit der Beleuchtungsrichtung sind nachfolgend im Zusammenhang mit FIG. 5 beschrieben.

FIG. 5 illustriert Aspekte in Bezug auf unterschiedliche Beleuchtungsrichtungen 1051, 1052. In FIG. 5 ist die Beleuchtung eines Messobjekts 499 unter der Beleuchtungsrichtung 1051 dargestellt; dabei ist die Beleuchtungsrichtung mit einer Lichtquelle 121A assoziiert und entspricht der Beleuchtungsgeometrie 301. Außerdem ist in FIG. 5 die Beleuchtung des Messobjekts 499 unter der Beleuchtungsrichtung 1052 dargestellt; dabei ist die Beleuchtungssicht 1052 mit einer Lichtquelle 121B assoziiert und entspricht der Beleuchtungsgeometrie 302.

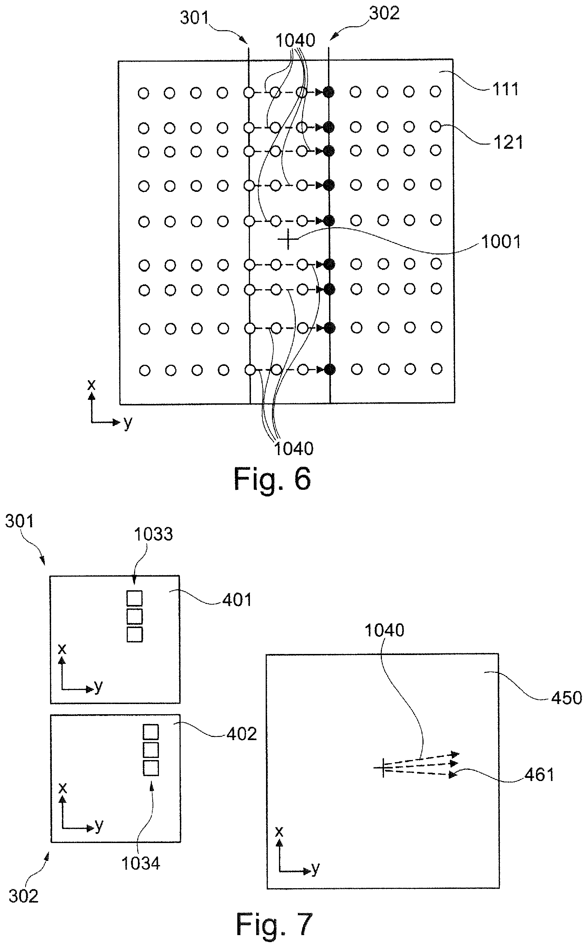

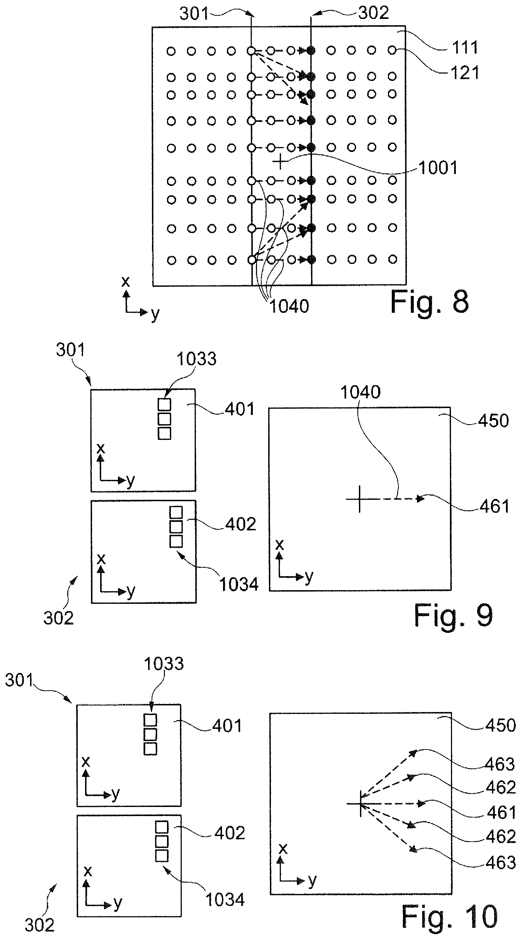

Im Allgemeinen kann eine Beleuchtungsgeometrie mehr als eine einzelne Beleuchtungsrichtung umfassen. Beispielsweise könnten linienförmige Muster von Lichtquellen verwendet werden, sodass eine entsprechende Anzahl von Beleuchtungsrichtungen pro Beleuchtungsgeometrie verwendet wird (cf. FIG. 6 und 8).

Bei Beleuchtung des Messobjekts 499 unter der Beleuchtungsrichtung 1051 ergibt sich eine Abbildung 1032 des Messobjekts 499 in der Fokusebene 1035 des Systems, die dann auf den Detektor 114 abgebildet wird. Bei Beleuchtung des Messobjekts 499 unter der Beleuchtungsrichtung 1052 ergibt sich eine Abbildung 1033 des Messobjekts 499 in der Fokusebene 1035. Aus FIG. 5 ist ersichtlich, dass die Positionen der Abbildungen 1032, 1033 um einen Abstand 1034 (mit T bezeichnet; vgl. Gl. 2 und 3) verschoben sind (Objektverschiebung).

In FIG. 5 sind ferner verschiedene Systemparameter illustriert. Beispielsweise ist der Abstand 1040, $\Delta L$ zwischen den Lichtquellen 121A sowie 121B dargestellt; der Abstand 1040 kann auch als Maß für den Abstand zwischen den Beleuchtungsrichtungen 1051, 1052 dienen. Als weiteres Maß für den Abstand zwischen den Beleuchtungsrichtungen 1051, 1052 könnten die Beleuchtungswinkel $\alpha, \beta$ dienen, welche die Beleuchtungsrichtungen 1051, 1052 mit der optischen Hauptachse 1001 (die entlang der Z-Richtung 1047 orientiert ist) einschließen.

FIG. 6 illustriert Aspekte in Bezug auf die Beleuchtungsgeometrien 301, 302 aus FIG. 5. FIG. 6 illustriert dabei das Beleuchtungsmodul 111 mit einer Vielzahl von Lichtquellen 121, die in einer Matrix-Struktur mit leicht variabler Einheitszelle auf einem entsprechenden Träger des Beleuchtungsmoduls 111 in der X-Y-Ebene angeordnet sind. Die optische Achse 1001 ist senkrecht zur Zeichenebene der FIG. 6 orientiert.

Aus FIG. 6 ist ersichtlich, dass die Beleuchtungsgeometrie 301 das Aktivieren einer Vielzahl von in einem Linienmuster angeordneten Lichtquellen 121 umfasst; entsprechend umfasst die Beleuchtungsgeometrie 302 das Ansteuern einer weiteren Vielzahl von in einem parallelen Linienmuster angeordneten Lichtquellen 121. Deshalb implementieren die Beleuchtungsgeometrien 301, 302 also jeweils mehrere Beleuchtungsrichtungen 1051, 1052.

Aus FIG. 6 ist ersichtlich, dass aufgrund der leicht variierenden Einheitszelle der Matrix-Struktur die Abstände 1040 zwischen den Lichtquellen 121 leicht variieren. Insbesondere variiert der Abstand 1040 zwischen denjenigen Lichtquellen 121, die nächstbenachbart zueinander sind und bei unterschiedlichen Beleuchtungsgeometrien 301, 302 aktiviert werden. Diese Variation der Abstände 1040 ergibt ein verbreitetes Korrelationsmaximum. Dies ist im Zusammenhang mit FIG. 7 näher dargestellt.

FIG. 7 illustriert Aspekte in Bezug auf Bilder 401, 402 sowie eine zugehörige 2-D Kreuzkorrelation. In FIG. 7 sind zunächst die Bilder 401, 402 dargestellt, die mit den Beleuchtungsgeometrien 301, 302 erfasst werden. Aufgrund der mehreren Beleuchtungsrichtungen 1051, 1052 wird das Messobjekt 499 jeweils mehrfach abgebildet: die entsprechenden Abbildungen 1033 sowie 1034 sind in X-Richtung versetzt angeordnet, das heißt entlang des Linienmusters der Beleuchtungsgeometrien 301, 302 (der Versatz in X-Richtung ist in FIG. 7 übertrieben stark dargestellt, zur Illustration).

In FIG. 7 ist auch die 2-D Kreuzkorrelation 450 zwischen dem Bild 401 und dem Bild 402 dargestellt, d.h. eine entsprechende Korrelationsmatrix (nachfolgend einfach Korrelation genannt). Dabei ist ersichtlich, dass das Korrelationsmaximum 461 aufgrund der variierenden Abstände 1040 in X-Richtung aufgeweitet ist.

In FIG. 7 ist lediglich das Korrelationsmaximum 461 erster Ordnung dargestellt.

FIG. 8 illustriert Aspekte in Bezug auf die Beleuchtungsgeometrien 301, 302. FIG. 8 entspricht grundsätzlich dem Beispiel der FIG. 6. Dabei sind jedoch in dem Beispiel der FIG. 8 die Lichtquellen 121 auf einem regelmäßigen Gitter ohne größere Abweichungen angeordnet. Deshalb ist das Korrelationsmaximum 461 nicht aufgeweitet, vergleiche FIG. 9.

Wiederum ist in FIG. 8 lediglich das Korrelationsmaximum 461 erster Ordnung dargestellt. FIG. 10 illustriert auch die Korrelationsmaxima zweiter und dritter Ordnung 462, 463. Diese entsprechen nicht-nächstbenachbarten Lichtquellen 121 (vergleiche diagonale gestrichelte Pfeile in FIG. 8).

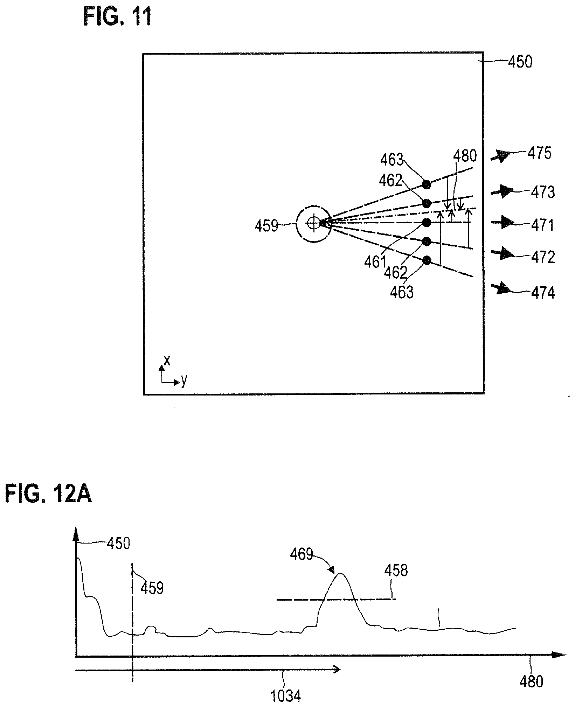

Im Allgemeinen kann eine Überlagerung der Signale mehrerer nächst-benachbarter Lichtquellen 121 ohne große Verbreiterung des Korrelationsmaximums 461 erster Ordnung gemäß der Implementierung der FIG. 8-10 erstrebenswert sein, um ein besonders großes Signal-zu-Rausch-Verhältnis zu erzielen. Eine weitere Verbesserung des Signal-zu-Rausch-Verhältnisses kann durch Berücksichtigung der Richtung der Objektverschiebung erzielt werden, z.B. im Zusammenhang mit entsprechendem a-priori Wissen. Solche Techniken sind nachfolgend im Zusammenhang mit FIG. 11 dargestellt.

FIG. 11 illustriert die Korrelation 450 zwischen den Bildern 401, 402, die mit den Beleuchtungsgeometrien 301, 302 gemäß FIG. 8 assoziiert sind. Das Szenario der FIG. 11 entspricht grundsätzlich dem Szenario der FIG. 9.

Dabei ist in FIG. 11 jeweils die Richtung 471 - 475 der erwarteten Objektverschiebung zwischen den Bildern 401, 402 dargestellt. Diese Richtungen 471 - 475 können als a-priori Wissen durch die Verbindungsvektoren zwischen den jeweils aktivierten Lichtquellen 121 des Beleuchtungsmoduls 111 erhalten werden (vergleiche Pfeile in FIG. 8), bzw. im Allgemeinen basierend auf einer relativen Positionierung der mit den Beleuchtungsgeometrien 301, 302 assoziierten Lichtquellen 121. Es ist dann möglich, lediglich diejenigen Datenpunkte der Korrelation 450 auszuwählen, die den Richtungen 471 - 475 entsprechen und die Objektverschiebung basierend auf diesen ausgewählten Datenpunkten zu erkennen. Dies bedeutet in anderen Worten, dass diejenigen Datenpunkte der Korrelation 450 ausgewählt werden können, die auf den vom Ursprung ausgehenden Geraden liegen, die entsprechende Richtungen 471 - 475 orientiert sind (gestrichelte Linien in FIG. 11).

Insbesondere können die auf den unterschiedlichen Geraden liegenden Datenpunkte miteinander kombiniert werden, d.h. einander überlagert werden. Dies ist möglich, indem entsprechendes a-priori Wissen über die Richtungen 471-475 verfügbar ist. Dies ist im Zusammenhang mit FIG. 12A dargestellt.

In FIG. 12A sind die Datenpunkte der Korrelation als Funktion der Position entlang Referenzrichtung 480 dargestellt. In FIG. 12A ist insbesondere ein entsprechendes Korrelationsmaximum 469 illustriert.

Im Szenario der FIG. 12A werden die Datenpunkte der Korrelation 450, die auf den unterschiedlichen Geraden liegen - das heißt in unterschiedlichen Richtungen 471 - 475 der Objektverschiebung entsprechen - miteinander kombiniert, zum Beispiel indem die Datenpunkte auf die Referenzrichtung 480 projiziert werden (vergleiche vertikale Pfeile und gestrichelt-gepunktete Linie in FIG. 11). Dadurch kann das Signal-zu-Rausch-Verhältnis zwischen dem Signal aufgrund der Objektverschiebung und dem Rauschen 492 weiter verbessert werden. Außerdem ist eine 1-D Auswertung mit geringer Komplexität möglich, wie in FIG. 12A dargestellt.

Als allgemeine Regel ergibt sich die Lage der Korrelationsmaxima 461-463 zu:

$$c_i = v_i \cdot \Delta z \frac{Mag}{L}, \qquad\qquad (4)$$

wobei $v_i$ der Abstandsvektor zwischen Lichtquellenpaaren i=1, 2, 3, ... ist (d.h. den Richtungen 471-475 entspricht), $c_i$ die Position des Korrelationsmaximums, $\Delta z$ die Defokusposition des Messobjekts, *Mag* die Vergrößerung einer Abbildungsoptik (typischerweise telezentrisch), sowie *L* der Abstand des Beleuchtungsmoduls zum Messobjekt.

Durch das Umwandeln der 2-D Korrelation 450 in eine 1-D Korrelation - etwa durch Aufsummieren aller Pfade *i* zwischen in den Beleuchtungsgeometrien 301, 302 aktivierten Lichtquellen 121A, 121B - kann das Signal-zu-Rausch-Verhältnis erhöht werden. Dabei kann ausgenutzt werden, dass die Objektverschiebung aufgrund der verwendeten Beleuchtungsgeometrien 301, 302 nur auf den durch das Beleuchtungsmodul definierten geraden (gestrichelte Linien in FIG. 11) verlaufen kann. Um die Überführung in die 1-D Korrelation durch Projektion auf die durch die Referenzrichtung 480 definierte Gerade vorzunehmen, ist der Abstandsvektor der beteiligten Lichtquellenpaare zu berücksichtigen:

$$c_{1d} = \sum_i c_i e_{1d}, \qquad\qquad (5)$$

wobei $e_{1d}$ der Richtungsvektor der Referenzgeraden 480 ist. Gleichung 5 kann eine abstandstreue Projektion auf die Gerade 480 ermöglichen.

Durch solche Techniken wird also erreicht, dass alle eingesetzten Beleuchtungsintensitäten - auch wenn diese zu Nebenmaxima der Korrelation führen - bei der Auswertung berücksichtigt werden. Außerdem werden Störstrukturen, die überall in der Korrelation 450 angeordnet sein können und zu lokalen Maxima führen, einen geringeren oder keinen Beitrag in die 1-D Korrelation gemäß FIG. 12A finden, weil diese nicht in der Summation entlang der Geraden der Richtungen 471 - 475 berücksichtigt werden. Außerdem kann die zeitaufwendige und komplizierte Auswertung der Korrelation 450 in 2-D auf ein schneller zu lösen des 1-D Problem reduziert werden.

Solche Techniken sind in dem Befund begründet, dass auch das Rauschen der Kamera oder Selbstähnlichkeiten des Messobjekts zu Störstrukturen in Form von Maxima in der Korrelation 450 führen können. Um das Signal-zu-Rausch-Verhältnis zu stärken, kann die disjunkte Struktur der Beleuchtungsgeometrien 301, 302 genutzt werden. Dazu kann zum Beispiel eine LED-Matrix als Beleuchtungsmodul 111 verwendet werden, bei der einzelne LEDs separat und individuell geschaltet werden können. Dann lässt sich das Messobjekt mittels jeder einzelnen LED aus einem kleinen, eingeschränkten Raumwinkelbereich beleuchten. Um eine übermäßige Aufweitung der entsprechenden Winkel der Beleuchtungsrichtungen zu vermeiden, kann die Verwendung von Streuschreiben oder anderen optischen Elementen zur Verbreiterung des Winkelspektrums vermieden werden. Ausreichend getrennte Leuchtdioden können verwendet werden.

In FIG. 11 und FIG. 12A ist auch ein Schwellenwert 459 dargestellt, der eine untere Grenze für die Objektverschiebung markiert. Der Schwellenwert 459 ist deshalb in Bezug auf den Nullpunkt der Korrelation 450 angeordnet. Korrelationsmaxima innerhalb des Schwellenwerts 459 werden bei der Auswertung ignoriert. Dies beruht auf der Erkenntnis, dass solche Korrelationsmaxima bei kleinen Objektverschiebungen typischerweise aufgrund von Störstrukturen wie beispielsweise fixed-pattern Rauschen des Detektors oder einem hellen Hintergrund resultieren.

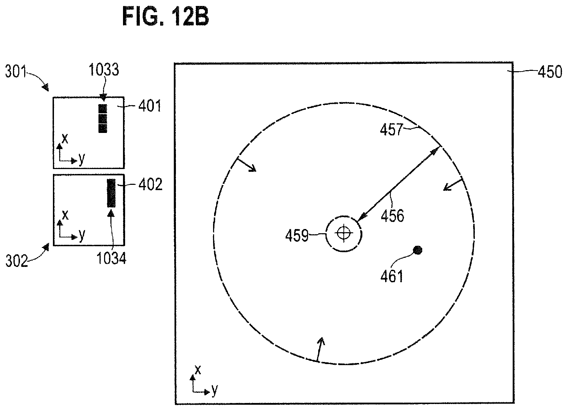

FIG. 12B illustriert Aspekte in Bezug auf die Korrelation 450. FIG. 12B entspricht grundsätzlich FIG. 11. Die Korrelation 450 wird wiederum durch Vergleichen von Bildern 401, 402, die den Beleuchtungsrichtungen 301, 302 entsprechen, gebildet. Dabei ist in FIG. 12B aus Gründen der Einfachheit lediglich das Korrelationsmaximum 461 der Abbildungspositionen 1033, 1034 des Messobjekts 499 in der ersten Ordnung dargestellt.

In dem Beispiel der FIG. 12B wird a-priori Wissen verwendet, welches einen Suchbereich 456 für die Objektverschiebung 1034 umfasst. Der Suchbereich 456 ist hin zu kleinen Objektverschiebungen 1034 begrenzt durch den Schwellenwert 459. Hin zu großen Objektverschiebungen 1034 ist der Suchbereich 456 auch durch einen Schwellenwert 457 begrenzt. Diese werden auch durch das a-priori Wissen vorgegeben. Datenpunkte der Korrelation 450 außerhalb des Suchbereichs 456 werden ignoriert. Der Schwellenwert 459 definiert eine minimal erkennbare Objektverschiebung 1034; und der Schwellenwert 457 definiert eine maximal erkennbare Objektverschiebung 1034.

Beispielsweise wäre es möglich, dass der Suchbereich 456 - beispielsweise insbesondere der obere Schwellenwert 457 - als Funktion der Iteration 9010 (vergleiche FIG. 2) angepasst wird. Das a-priori Wissen kann also den Suchbereich 456 als Funktion der Iteration 9010 umfassen. Beispielsweise kann erwartet werden, dass für spätere Iterationen 9010 lediglich eine kleine Defokusposition des Messobjekts 499 vorliegt, zum Beispiel aufgrund einer Eigenbewegung der Probe oder zeitlichen Drifts. Dies kann dadurch berücksichtigt werden, dass der obere Schwellenwert 457 vergleichsweise klein gewählt wird - zum Beispiel im Vergleich zu initialen Iterationen 9010, in denen auch eine große Defokusposition des Messobjekts 499 aufgrund einer schlechten initialen Fokussierung vorliegen kann. Diese fortschreitende Verringerung des oberen Schwellenwerts ist in FIG. 12B durch die Pfeile gekennzeichnet.

Alternativ oder zusätzlich von einer solchen Abhängigkeit des oberen Schwellenwerts 457 von der Iteration 9010 wäre es auch möglich, dass das a-priori Wissen den Suchbereich 456 - beispielsweise insbesondere den oberen Schwellenwert 457 - für unterschiedliche Tiefenschärfebereiche der Abbildungsoptik 112 des Mikroskops 100 umfasst. Beispielsweise könnte der obere Schwellenwert 457 parametrisiert in Abhängigkeit von dem Tiefenschärfebereich der Abbildungsoptik 112 bereitgestellt werden.

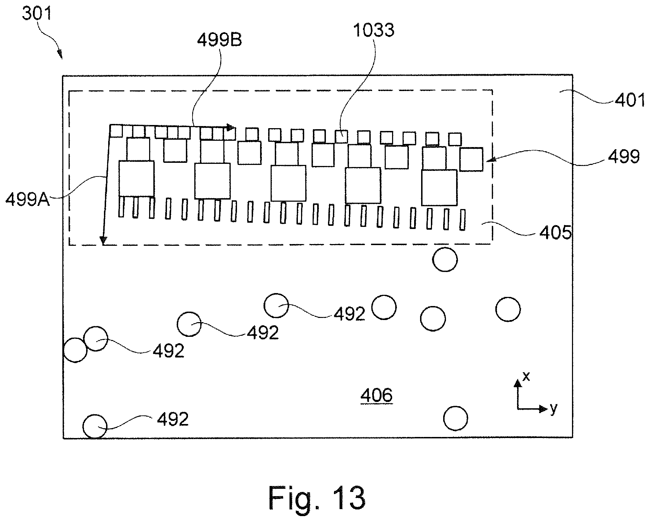

Obenstehend wurden also verschiedene Techniken im Zusammenhang mit den FIG. 6-12B beschrieben, welche eine Trennung der Abbildung 1033, 1034 des Messobjekts 499 von den Störstrukturen 492 auf Grundlage der Korrelation 450 ermöglichen. Solche Techniken können ersetzt oder ergänzt werden durch weitere Techniken zur Trennung der Abbildung 1033, 1034 des Messobjekts 499 von den Störstrukturen 492. Eine weitere beispielhafte Technik ist zum Beispiel im Zusammenhang mit FIG. 13 beschrieben.

FIG. 13 illustriert Aspekte in Bezug auf eine Bildkachelung eines Bilds 401. In dem Bild 401 ist das Messobjekt 499 - eine technische, periodische Struktur mit geringem Kontrast - dargestellt. Außerdem sind Störstrukturen 492 sichtbar. A-priori Wissen wird verwendet, welches die Abbildungspositionen der Störstrukturen 492 im Bild 401 angibt. Beispielsweise könnten entsprechende Steuerdaten von einer Benutzerschnittstelle von einem Benutzer des Mikroskops 100 erhalten werden. Der Benutzer könnte eine entsprechende Bildsegmentierung durchführen. Alternativ oder zusätzlich wäre es aber auch möglich, dass entsprechende Steuerdaten von einem trainierten Klassifikator erhalten werden, der auf dem Bild 401 operiert und der eingerichtet ist, um die Abbildungspositionen der Störstrukturen 492 und/oder die Abbildungsposition 1033 des Messobjekts 499 zu erkennen. Ferner könnte zum Beispiel a-priori Wissen über den Kontrast der Störstrukturen 492 und/oder über den Kontrast des Messobjekts 499 verwendet werden: aus FIG. 13 ist nämlich ersichtlich, dass der Kontrast für die Störstrukturen 492 stärker ist, als für das Messobjekt 499. Dies kann ausgenutzt werden, um die Abbildungspositionen der Störstrukturen 472 bzw. die Abbildungsposition des Messobjekts 499 zu erkennen.

Im Beispiel der FIG. 13 wird dann in Abhängigkeit von den Abbildungspositionen der Störstrukturen 492 bzw. des Messobjekts 499 eine Bildkachelung auf das Bild 401 angewendet. Eine entsprechende Bildkachel 405 ist in FIG. 13 mit der gestrichelten Linie dargestellt. Innerhalb der Bildkachel 405 ist das Messobjekt 499 abgebildet; die komplementäre Bildkachel 406 umfasst die Störstrukturen 492. Dann kann eine Auswertung des Bilds 401 in der Bildkachel 406 unterdrückt werden. Beispielsweise könnte die Korrelation 450 lediglich auf Grundlage der Bildpunkte in der Bildkachel 405 berechnet werden, nicht aber auf Grundlage der Bildpunkte in der Bildkachel 406.

In FIG. 13 sind auch Richtungen 499A, 499B dargestellt, entlang derer das Messobjekt 499 eine Ortsraumperiodizität aufweist. Die Richtungen 499A, 499B der Ortsraumperiodizität könnten als a-priori Wissen zur Verfügung stehen. Im Zusammenhang mit den hierin beschriebenen Techniken kann es möglich sein, die Richtungen 471 - 475 (vergleiche FIG. 11) derart zu wählen, dass diese nicht koinzident sind mit den Richtungen 499A, 499B. Dann kann nämlich zwischen Korrelationsmaxima aufgrund der Ortsraumperiodizität des Messobjekts 499 als Störstrukturen in Bezug auf das Bestimmen der Objektverschiebung und Korrelationsmaxima aufgrund der verwendeten Beleuchtungsgeometrien 301, 302 unterschieden werden. Um dies inhärent zu erreichen, kann die verwendete Beleuchtungsgeometrie 301, 302 zwischen aufeinanderfolgenden Iterationen angepasst werden (vergleiche Block 9008 aus FIG. 2). Derart kann zumindest im Mittel erreicht werden, dass eine solche Trennung von Ortsraumperiodizität des Messobjekts 499 und Objektverschiebung aufgrund von Beleuchtungsgeometrien 301, 302 erreicht wird.

Zusätzlich könnte bei definierter Anordnung des Messobjekts 499 - zum Beispiel durch eine Referenzmessung bestimmt oder nachdem der Benutzer das Messobjekt manuell fokussiert hat - die Qualität durch aktive Bestimmung der Ortsraumperiodizität des Messobjekts weiter verbessert werden. Dies bedeutet, dass beispielsweise die Richtungen 499A, 499B aktiv vermessen werden können. So ließe sich die Ortsraumperiodizität des Messobjekts im Fokus in einer Kalibrationsphase messen, um dann als Hintergrund bzw. Dämpfung in der Auswertung der Korrelation 450 berücksichtigt zu werden. Das a-priori Wissen kann also die Ortsraumperiodizität des Messobjekts 499 umfassen.

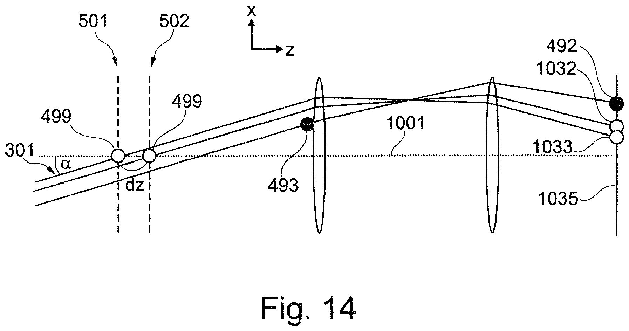

FIG. 14 illustriert Techniken in Bezug auf die Variation der Z-Position 501, 502 der Probenbühne 113 und damit auch des auf der Probenbühne 113 angeordneten Messobjekts 499. Im Beispiel der FIG. 14 wird das Messobjekt 499 durchgängig mit einer Beleuchtungsgeometrie 301, die einem entsprechenden Winkel α entspricht, beleuchtet (vergleiche auch FIG. 5).

Bei Veränderung der Z-Position 501, 502 verändert sich die Position der Abbildung 1032, 1033 des Messobjekts 499. Andererseits bleibt aber die Störstruktur 492 als Abbildung eines Staubpartikels 493, der nicht an der Probenbühne 113 befestigt ist, unverändert. Deshalb können solche Anteile in dem entsprechenden Bild, die gegenüber der Variation der Z-Position 501, 502 unveränderlich sind, als Störstrukturen erkannt werden.

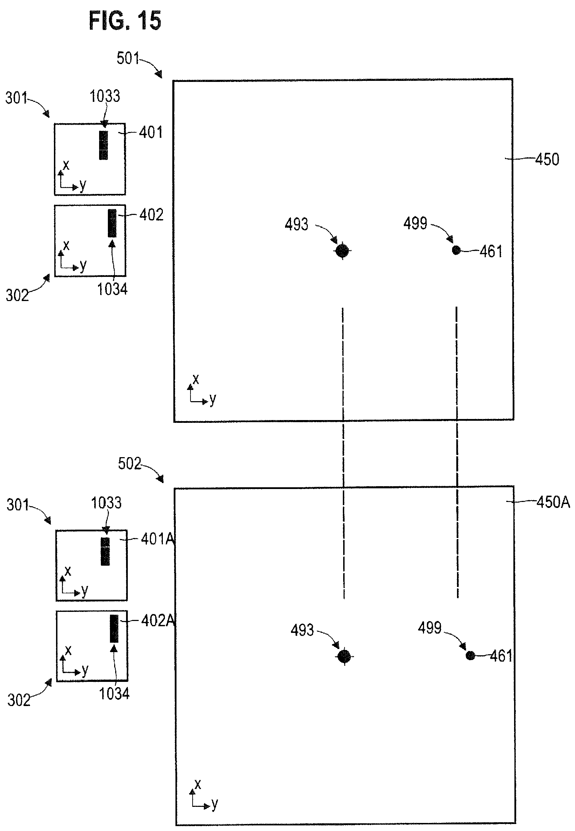

Dabei könnte zum Beispiel die iterative Veränderung der Z-Position 501, 502 gemäß Block 9006 aus FIG. 2 zum Erhalten von entsprechenden Referenzbildern, die den unterschiedlichen Z-Positionen 501, 502 entsprechen, genutzt werden. Das bedeutet, dass Referenzbilder für abweichende Z-Positionen 501, 502 aus ein oder mehreren vorangehenden Iterationen 9010 erhalten werden können. Alternativ könnten auch dedizierte Referenzmessungen - z.B. in einer entsprechenden Kalibrationsphase - für die unterschiedlichen Z-Positionen 501, 502 während einer Iteration 9010 durchgeführt werden. Ein solches Szenario ist im Zusammenhang mit FIG. 15 dargestellt.

FIG. 15 illustriert 2-D Korrelationen 450, die zwischen Bildern 401, 402 bei zwei Beleuchtungsgeometrien 301, 302 gebildet werden. Dabei entspricht die 2-D Korrelation 450 in FIG. 15, oben, der Z-Position 501; und die 2-D Korrelation 450A in FIG. 15, unten, der Z-Position 502. Dies bedeutet, dass die Korrelation 450A für die Referenzbilder 401A, 402A gebildet wird; während die Korrelation 450 für die Bilder 401, 402, die anschließend auch für das Bestimmen der Objektverschiebung 1034 verwendet werden, gebildet wird.

Aus einem Vergleich der Korrelationen 450, 450A ist ersichtlich, dass das Korrelationsmaximum der Störstruktur 493 keine Veränderung als Funktion der Z-Position 501, 502 aufweist; das Korrelationsmaximum 461 des Messobjekts 499 jedoch schon (in FIG. 15 sind entsprechende horizontale, gestrichelte Linien als Hilfslinien für das Auge dargestellt).

Dies kann ausgenutzt werden, um die Korrelation 450 zu bereinigen, d. h. Korrelationsmaxima, die der Störstruktur 493 entsprechen, zu entfernen. Dies kann durch folgende Berechnung erfolgen:

$$\breve{K} = K\left|K - K_{ref}\right|, \tag{6}$$

wobei K die Korrelation 450 bezeichnet, $K_{ref}$ die Korrelation 450A der Referenzbilder 401A, 402A, und $\breve{K}$ die korrigierte Korrelation. Ausgehend von der korrigierten Korrelation können dann wiederum Techniken, wie sie zum Beispiel voranstehend in Bezug auf die FIG. 6-12 oder FIG. 13 beschrieben wurden, eingesetzt werden.

FIG. 16 ist ein Flussdiagramm eines beispielhaften Verfahrens. FIG. 16 illustriert die Verwendung von ein oder mehreren optischen Systemparametern im Zusammenhang mit dem Bestimmen der Defokusposition. Beispielsweise kann die Defokusposition basierend auf der Objektverschiebung sowie basierend auf Werten von ein oder mehreren Systemparametern bestimmt werden, siehe Gleichung 4; vgl. Block 9005.

Dies bedeutet, dass manche der hierin beschriebenen Techniken auf dem Wissen oder Zugänglichkeit aktueller Werte für die Systemparameter beruhen. Da Systemkomponenten eines Mikroskops 100 typischerweise über eine Benutzerschnittstelle individuell konfiguriert werden oder auch individuelle Unterschiede von Gerät zu Gerät aufweisen, kann es hilfreich sein, eine Aktualisierung der Systemparameter vorzunehmen, sobald Komponenten des Mikroskops 100 gewechselt oder neu justiert werden. Beispielsweise können insbesondere Systemparameter gemäß Gleichungen 2, 3 oder 4 angepasst werden, das heißt zum Beispiel Vergrößerung und Abstand des Beleuchtungsmoduls 111 von der Probenbühne 113.

Dabei stehen grundsätzlich unterschiedlichste Techniken zur Verfügung, um ein oder mehrere solche Systemparameter zu bestimmen. In einem ersten Beispiel können ein oder mehrere Systemparameter aus Spezifikationen der Hardware-Komponenten des Mikroskops 100 bestimmt werden. Dies betrifft beispielsweise Abstände und Positionen von Lichtquellen 121, 121-1, 121-2 im Beleuchtungsmodul 111. Da die Lichtquellen typischerweise fest auf einem Träger des Beleuchtungsmoduls 111 angebracht sind, weisen solche Systemparameter - die zum Beispiel im Zusammenhang mit Gleichung 4 für die Richtungen 471-475 hilfreich sein können - keinen oder keinen signifikanten Drift auf, etwa als Funktion der Temperatur oder Zeit. In einem weiteren Beispiel wäre es - alternativ oder zusätzlich - möglich, eine systematische Kalibrierung zum Beispiel mit geeigneten Referenzmessobjekten durchzuführen. Schließlich ist es - alternativ oder zusätzlich - möglich, ein oder mehrere Systemparameter aus aktuellen Messungen durch geeignete Auswertung zu bestimmen. Hierbei kann insbesondere eine selbstkonsistente Anpassung über mehrere Iterationen 9010 (cf. FIG. 2) hilfreich sein.

Dabei kann es in einem solchen Szenario erstrebenswert sein, Verfälschungen der selbstkonsistenten Anpassung zu vermeiden. Solche Verfälschungen können etwa dann auftreten, wenn die Objektverschiebung 1034 falsch bestimmt wird. Deshalb kann es hilfreich sein, eine Vertrauenswürdigkeit bzw. ein Konfidenzniveau in Bezug auf die erkannte Objektverschiebung 1034 zu berücksichtigen. Dies kann zum Beispiel im Zusammenhang mit einem Schwellenwert 458 für das entsprechende Korrelationsmaximum erfolgen (vergleiche FIG. 12A). Beispielsweise könnte eine normierte Signalhöhe 450 für das Korrelationsmaximum 469 ausgewertet werden:

$$C = \frac{Cmax - Cmin}{Cmax} > C_{thres} \tag{7},$$

wobei Cmax den Signalwert am Maximum 469 bezeichnet, Cmin den Signalwert am Minimum der Korrelation 450 und $C_{thres}$ den Schwellenwert 458.

Bei Unterschreitung des Schwellenwerts 458 kann eine fehlerhafte Erkennung der Objektverschiebung vorliegen, sodass entsprechende Signalwerte gegebenenfalls zu verwerfen sind und eine erneute Erkennung der Objektverschiebung mit einer veränderten Beleuchtungsgeometrie und/oder veränderten Z-Position durchzuführen wäre. Dabei ist ersichtlich, dass durch die Überlagerung der Signalwerte der Korrelation entlang der verschiedenen Richtungen 471-475 im Szenario der FIG. 12A durch das größere Signal-zu-Rausch-Verhältnis ein größerer Schwellenwert 458 - und damit eine größere Zuverlässigkeit - gewährleistet werden kann. Im Allgemeinen kann aber Gleichung 7 auch ohne eine solche Überlagerung der Signalwerte entlang der Richtungen 471-475 erfolgen.

Wenn das Korrelationsmaximum 469 zuverlässig gefunden wurde - beispielsweise besonders zuverlässig durch Berücksichtigung des Schwellenwerts 458, vgl. Gleichung 7 -, dann kann dies als Ausgangslage für eine selbstkonsistente Anpassung der Werte der Systemparameter erfolgen. Dies ist im Zusammenhang mit dem Verfahren in FIG. 16 erläutert. Dabei werden zunächst Standardwerte bzw. Ausgangswerte für die Systemparameter 9011 im Rahmen einer Initialisierung 9012 erhalten. Im Beispiel der FIG. 16 umfassen die Systemparameter 9011 die Parameter aus Gleichung 4. Beispielsweise könnte die Initialisierung 9012 Standardwerte auf Grundlage einer Konfiguration des Mikroskops 100 bereitstellen. Diese könnten etwa aus einem nichtflüchtigen Systemspeicher geladen werden, etwa aus eine Bootpartition oder einer Firmware-Partition des Systemspeichers.

Ein Laufindex *i* wird in einer ersten Iteration 9010 initialisiert, siehe Block 9016. Z.B. könnte *i*=0 initialisiert werden.

In 9017 wird eine Messung durchgeführt. Dies umfasst die Einstellung einer bestimmten Z-Position 501, 502 sowie von Beleuchtungsgeometrien 301, 302, d. h. insbesondere den aktivierten Lichtquellen 121, des Abstands 1040, sowie der Richtungen 471 - 475 (vergleiche FIG. 5 - 11), siehe Block 9018.

Dann werden in Block 9019 die Bilder 401, 402 bei den verschiedenen Beleuchtungsgeometrien 301, 302 bzw. gemäß den zuvor gewählten Einstellungen erfasst (vergleiche auch Blöcke 9001, 9002 aus FIG. 2).

In Block 9020 erfolgt dann die Auswertung, d. h. es wären zum Beispiel die Blöcke 9003-9004 aus FIG. 2 ausgeführt und die Objektverschiebung 1034 erkannt.

In Block 9022 - im Allgemeinen ein optionaler Block - wird anschließend überprüft, ob das Konfidenzniveau, mit welchem die Objektverschiebung 1034 erkannt wurde, ausreichend ist. Dazu könnte zum Beispiel eine Auswertung gemäß Gleichung 7 durchgeführt werden.

Wenn das Konfidenzniveau nicht ausreichend ist, werden in Block 9021 die Messwerte für die Defokusposition verworfen und in Block 9016 zur nächsten Iteration vorangeschritten. Dann wird in der nächsten Iteration 9010 von Block 9018 die Beleuchtungsgeometrie angepasst (vergleiche auch Block 9008 aus FIG. 2) und/oder optional auch die Z-Position 501, 502 zum Beispiel zufällig oder inkrementell verändert.

Andernfalls wird in Block 9013 die Defokusposition $\Delta z$ bestimmt (vgl. Block 9005 aus FIG. 2), für $i$=0 unter Verwendung der Systemparameter 9011. Beispielsweise können in der initialen Iteration 9010 $i$=0 die aus 9012 erhaltenen Werte für die Systemparameter verwendet werden. In Block 9014 wird dann die Z-Position 501, 502 eingestellt (vergleiche Block 9006 aus FIG. 2). Beispielsweise könnte die Z-Position 501, 502 derart eingestellt werden, dass die Defokusposition nominell auf null gesetzt wird. Die Veränderung der Z-Position 501, 502 ist gegeben durch $\Delta pz = pz_{i+1} - pz_i$

Dann wird in Block 9016 die nächste Iteration 9010 ausgelöst, $i \rightarrow i + 1$.

Außerdem wird Block 9015 durchgeführt. Dort erfolgt ein Vergleich der Änderung der Defokusposition zwischen zwei Iterationen, mit der Änderung der Z-Position 501, 502 zwischen den zwei Iterationen, also z.B. für $i$ und $i$+1. Beispielsweise kann jeweils der berechnete Wert der Defokusposition aus zwei Iterationen 9010 von Block 9013 subtrahiert werden ($\Delta z_{i+1} - \Delta z_i$) und verglichen werden mit der durch Steuerdaten der Probenbühne 113 indizierten Veränderung der Z-Position 501, 502 aus diesen Iterationen 9010 von Block 9014 ($\Delta pz = pz_{i-1} - pz_i$). Wenn mit den aktuellen Systemparametern eine Abweichung zwischen der Änderung der Defokusposition und der Änderung der Z-Position 501, 502 vorliegt, d. h. $\Delta pz / (\Delta z_{i-1} - \Delta z_i) \neq 1$, kann ein selbstkonsistentes Anpassen der Systemparameter erfolgen, etwa derart, dass $\Delta pz / (\Delta z_{i-1} - \Delta z_i) = 1$ oder durch eine andere schrittweise Annäherung. Dies beruht auf der Erkenntnis, dass es erstrebenswert sein kann, für vertrauenswürdige Ergebnisse der Objektverschiebung die Änderungen in den Aufnahmeparametern zu protokollieren, um für eine aktuelle Konfiguration des Mikroskops 100 einen genauen Zusammenhang zwischen Objektverschiebung und Defokusposition einerseits, sowie Repositionierung der Probenbühne andererseits zu erhalten.

Für nachfolgende Iterationen 9010 wird dann in 9013 der angepasste Wert der Systemparameter verwendet.

Zusammenfassend wurden voranstehend verschiedene Techniken beschrieben, um Autofokus-Anwendungen durch digitale Nachbearbeitung von Bildern, die mit winkelvariablen Beleuchtungsgeometrien erfasst wurden, zu ermöglichen. Diese Techniken ermöglichen es, besonders robust und zügig die Defokusposition des Messobjekts zu bestimmen. Dies ermöglicht es, beispielsweise Langzeit-Messungen zuverlässig durchzuführen.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Beispielsweise wurden voranstehend verschiedene Techniken beschrieben, bei denen Rohbilder ohne Vorverarbeitung verwertet werden. Dabei kann es aber in den verschiedenen Beispielen möglich sein, dass eine Vorverarbeitung erfolgt. Zum Beispiel könnte es möglich sein, dass ein mittlerer Kontrast von den verschiedenen Bildpunkten eines Bilds abgezogen wird, etc.. Andere Vorverarbeitungstechniken können im Zusammenhang mit dem Erfassen des mindestens einen Bilds berücksichtigt werden.

**Patentansprüche**

1. Verfahren zum Betreiben eines Mikroskops (100), das umfasst:

    - Erfassen von mehreren Bildern (401, 402, 401A, 402A) bei einer Vielzahl von winkelvariablen Beleuchtungsgeometrien (300-302), wobei jedes Bild (401, 402, 401A, 402A) jeweils eine Abbildung eines Messobjekts unter einer einzelnen Beleuchtungsgeometrie (300-302) beinhaltet,
    - basierend auf Steuerdaten, die indikativ für a-priori Wissen sind: Durchführen einer Trennung einer Abbildung (1032, 1033) des Messobjekts (499) von Störstrukturen (492, 493) in den Bildern (401, 402, 401A, 402A),
    - basierend auf der Trennung: Erkennen von gegenüber einer Veränderung der winkelvariablen Beleuchtungsgeometrie veränderlichen Anteilen in den Bildern (401, 402, 401A, 402A) als Objektverschiebung (1034) des Messobjekts (499),
    - basierend auf der Objektverschiebung (1034): Bestimmen einer Defokusposition des Messobjekts (499), und
    - basierend auf der Defokusposition: Einstellen einer Z-Position (501, 502) einer Probenbühne (113) des Mikroskops (100),

    wobei das a-priori Wissen mindestens eine Richtung (471-475) der Objektverschiebung (1034) in den Bildern (401, 402, 401A, 402A) umfasst.

2. Verfahren nach Anspruch 1, das weiterhin umfasst:

    - Durchführen einer Korrelation (450, 450A) der Bilder (401, 402, 401A, 402A), und
    - Auswählen von Datenpunkten der Korrelation (450, 450A), die der mindestens einen Richtung (471-475) der Objektverschiebung (1034) entsprechen,

wobei die Objektverschiebung (1034) basierend auf den ausgewählten Datenpunkten erkannt wird.

3. Verfahren nach Anspruch 2, das weiterhin umfasst:

   - Auswählen von ersten Datenpunkten der Korrelation (450, 450A), die einer ersten Richtung (471-475) der mindestens einen Richtung (471-475) entsprechen,
   - Auswählen von zweiten Datenpunkten der Korrelation (450, 450A), die einer zweiten Richtung (471-475) der mindestens einen Richtung (471-475) entsprechen, und
   - Überlagern der ersten Datenpunkte und der zweiten Datenpunkte,

   wobei die Objektverschiebung (1034) basierend auf den ausgewählten und überlagerten Datenpunkten erkannt wird.

4. Verfahren nach einem der Ansprüche 2 oder 3, das weiterhin umfasst:

   - Bestimmen der mindestens einen Richtung (471-475) der Objektverschiebung (1034) basierend auf einer relativen Positionierung von Lichtquellen (121, 121-1, 121-2, 121A, 121B) eines Beleuchtungsmoduls (111) des Mikroskops (100), die mit der Vielzahl von winkelvariablen Beleuchtungsgeometrien (300-302) assoziiert sind.

5. Verfahren nach einem der voranstehenden Ansprüche,
   wobei das a-priori Wissen einen Suchbereich (456, 457, 459) für die Objektverschiebung (1034) umfasst.

6. Verfahren nach Anspruch 5,

   wobei das Erfassen der Bilder (401, 402, 401A, 402A) bei der Vielzahl von winkelvariablen Beleuchtungsgeometrien (300-302) sowie das zugehörige Einstellen der Z-Position (501, 502) für eine Vielzahl von Iterationen (9010) wiederholt durchgeführt werden,
   wobei das a-priori Wissen den Suchbereich (456, 457, 459) als Funktion der Iteration (9010) umfasst.

7. Verfahren nach Anspruch 5 oder 6,
   wobei das a-priori Wissen den Suchbereich (456, 457, 459) für verschiedene Tiefenschärfebereiche eine Abbildungsoptik (113) des Mikroskops (100) umfasst.

8. Verfahren nach einem der voranstehenden Ansprüche,
   wobei das a-priori Wissen zumindest eines von Abbildungspositionen der Störstrukturen (492, 493) und einer Abbildungsposition des Messobjekts (499) in den Bildern (401, 402, 401A, 402A) umfasst.

9. Verfahren nach Anspruch 8, das weiterhin umfasst:

   - in Abhängigkeit von den Abbildungspositionen der Störstrukturen (492, 493): Anwenden einer Bildkachelung (405, 406) auf die Bilder (401, 402, 401A, 402A), und
   - Unterdrücken einer Auswertung der Bilder (401, 402, 401A, 402A) in Bildkacheln der Bildkachelung (405, 406), welche die Störstrukturen (492, 493) beinhalten.

10. Verfahren nach einem der voranstehenden Ansprüche,

    wobei das a-priori Wissen zumindest eines von einem Kontrast der Störstrukturen (492, 493) und einem Kontrast der Abbildung (1032, 1033) des Messobjekts (499) in den Bildern (401, 402, 401A, 402A) umfasst,
    wobei das Verfahren weiterhin umfasst:

    - Durchführen einer Korrelation (450, 450A) der Bilder (401, 402, 401A, 402A),
    - Erkennen von mindestens einem Korrelationsmaximums (461-463, 469) in der Korrelation (450, 450A), und
    - basierend auf dem Kontrast der Störstrukturen (492, 493): Verwerfen des mindestens einen Korrelationsmaximums (461-463, 469).

11. Verfahren nach einem der voranstehenden Ansprüche,
    wobei das a-priori Wissen eine Ortsraumperiodizität (499A, 499B) des Messobjekts (499) umfasst.

**12.** Verfahren nach einem der voranstehenden Ansprüche, das weiterhin umfasst:

- Erhalten der Steuerdaten von einer Benutzerschnittstelle des Mikroskops (100), und/oder von einem trainierten Klassifikator, der auf den Bildern (401, 402, 401A, 402A) operiert.

**13.** Steuereinheit für ein Mikroskop, die eine Logikschaltung umfasst, die eingerichtet ist, um die folgenden Schritte auszuführen:

- Erfassen von Bildern bei einer Vielzahl von winkelvariablen Beleuchtungsgeometrien, wobei jedes Bild (401, 402, 401A, 402A) jeweils eine Abbildung eines Messobjekts unter einer einzelnen Beleuchtungsgeometrie (300-302) beinhaltet
- basierend auf Steuerdaten, die indikativ für a-priori Wissen sind: Durchführen einer Trennung einer Abbildung des Messobjekts von Störstrukturen in den Bildern,

    - basierend auf der Trennung: Erkennen von gegenüber einer Veränderung der winkelvariablen Beleuchtungsgeometrie veränderlichen Anteilen in den Bildern als Objektverschiebung des Messobjekts,
    - basierend auf der Objektverschiebung: Bestimmen einer Defokusposition des Messobjekts, und

    - basierend auf der Defokusposition: Einstellen einer Z-Position einer Probenbühne des Mikroskops,

wobei das a-priori Wissen mindestens eine Richtung (471-475) der Objektverschiebung (1034) in den Bildern (401, 402, 401A, 402A) umfasst.

**14.** Steuereinheit für ein Mikroskop nach Anspruch 13,
wobei die Logikschaltung weiter dafür eingerichtet ist, ein Verfahren nach einem der Ansprüche 2 bis 12 durchzuführen.

**15.** Mikroskop umfassend eine Steuereinheit nach einem der Ansprüche 13 oder 14.

**Claims**

**1.** Method for operating a microscope (100), comprising:

- acquiring multiple images (401, 402, 401A, 402A) with a multiplicity of variable-angle illumination geometries (300-302), wherein each image (401, 402, 401A, 402A) in each case contains a depiction of a measurement object under a single illumination geometry (300-302),
- based on control data indicative of a priori knowledge: carrying out a separation of a depiction (1032, 1033) of the measurement object (499) from interference structures (492, 493) in the images (401, 402, 401A, 402A),
- based on the separation: recognizing components in the images (401, 402, 401A, 402A) that change in relation to a change in the variable-angle illumination geometry as an object displacement (1034) of the measurement object (499),
- based on the object displacement (1034): determining a defocus position of the measurement object (499), and
- based on the defocus position: setting a Z position (501, 502) of a sample stage (113) of the microscope (100),

wherein the a priori knowledge comprises at least one direction (471-475) of the object displacement (1034) in the images (401, 402, 401A, 402A).

**2.** Method according to Claim 1, furthermore comprising:

- carrying out a correlation (450, 450A) of the images (401, 402, 401A, 402A), and
- selecting data points of the correlation (450, 450A) that correspond to the at least one direction (471-475) of the object displacement (1034),

wherein the object displacement (1034) is recognized based on the selected data points.

**3.** Method according to Claim 2, furthermore comprising:

- selecting first data points of the correlation (450, 450A) that correspond to a first direction (471-475) of the at least one direction (471-475),
- selecting second data points of the correlation (450, 450A) that correspond to a second direction (471-475) of the at least one direction (471-475), and
- superimposing the first data points and the second data points,

wherein the object displacement (1034) is recognized based on the selected and superimposed data points.

4. Method according to either of Claims 2 and 3, furthermore comprising:

- determining the at least one direction (471-475) of the object displacement (1034) based on a relative positioning of light sources (121, 121-1, 121-2, 121A, 121B) of an illumination module (111) of the microscope (100), said light sources being associated with the multiplicity of variable-angle illumination geometries (300-302) .

5. Method according to one of the preceding claims, wherein the a priori knowledge comprises a search region (456, 457, 459) for the object displacement (1034).

6. Method according to Claim 5,
wherein the acquisition of the images (401, 402, 401A, 402A) with the multiplicity of variable-angle illumination geometries (300-302) and the associated setting of the Z position (501, 502) are carried out repeatedly for a multiplicity of iterations (9010), wherein the a priori knowledge comprises the search region (456, 457, 459) as a function of the iteration (9010).

7. Method according to Claim 5 or 6,
wherein the a priori knowledge comprises the search region (456, 457, 459) for different depth-of-field ranges of an imaging optical unit (113) of the microscope (100) .

8. Method according to one of the preceding claims,
wherein the a priori knowledge comprises at least one of imaging positions of the interference structures (492, 493) and an imaging position of the measurement object (499) in the images (401, 402, 401A, 402A).

9. Method according to Claim 8, furthermore comprising:

- depending on the imaging positions of the interference structures (492, 493): applying tiling (405, 406) to the images (401, 402, 401A, 402A) and
- suppressing an evaluation of the images (401, 402, 401A, 402A) in image tiles of the tiling (405, 406) that contain the interference structures (492, 493).

10. Method according to one of the preceding claims,

wherein the a priori knowledge comprises at least one of a contrast of the interference structures (492, 493) and a contrast of the depiction (1032, 1033) of the measurement object (499) in the images (401, 402, 401A, 402A),
wherein the method furthermore comprises:

- carrying out a correlation (450, 450A) of the images (401, 402, 401A, 402A),
- recognizing at least one correlation maximum (461-463, 469) in the correlation (450, 450A), and
- based on the contrast of the interference structures (492, 493): discarding the at least one correlation maximum (461-463, 469).

11. Method according to one of the preceding claims,
wherein the a priori knowledge comprises a real space periodicity (499A, 499B) of the measurement object (499).

12. Method according to one of the preceding claims, furthermore comprising:

- obtaining the control data from a user interface of the microscope (100), and/or from a trained classifier operating on the images (401, 402, 401A, 402A).

**13.** Control unit for a microscope, comprising a logic circuit configured to carry out the following steps:

- acquiring images with a multiplicity of variable-angle illumination geometries, wherein each image (401, 402, 401A, 402A) in each case contains a depiction of a measurement object under a single illumination geometry (300-302),
- based on control data indicative of a priori knowledge: carrying out a separation of a depiction of the measurement object from interference structures in the images,
- based on the separation: recognizing components in the images that change in relation to a change in the variable-angle illumination geometry as an object displacement of the measurement object,
- based on the object displacement: determining a defocus position of the measurement object, and
- based on the defocus position: setting a Z position of a sample stage of the microscope,

wherein the a priori knowledge comprises at least one direction (471-475) of the object displacement (1034) in the images (401, 402, 401A, 402A).

**14.** Control unit for a microscope according to Claim 13, wherein the logic circuit is furthermore configured to carry out a method according to one of Claims 2 to 12.

**15.** Microscope comprising a control unit according to either of Claims 13 and 14.

**Revendications**

**1.** Procédé permettant de faire fonctionner un microscope (100), comprenant les étapes consistant à :

- acquérir plusieurs images (401, 402, 401A, 402A) avec une pluralité de géométries d'éclairage (300-302) à angle variable, dans lequel chaque image (401, 402, 401A, 402A) contient respectivement une représentation d'un objet mesuré selon une géométrie d'éclairage individuelle (300-302),
- sur la base de données de commande qui indiquent une connaissance a priori : effectuer une séparation d'une représentation (1032, 1033) de l'objet mesuré (499) des structures parasites (492, 493) sur les images (401, 402, 401A, 402A),
- sur la base de la séparation : identifier des parties sur les images (401, 402, 401A, 402A), variables quant à une variation de la géométrie d'éclairage à angle variable, comme un décalage d'objet (1034) de l'objet mesuré (499),
- sur la base du décalage d'objet (1034) : déterminer une position de défocalisation de l'objet mesuré (499), et
- sur la base de la position de défocalisation : régler une position Z (501, 502) d'une plateforme d'échantillon (113) du microscope (100),

dans lequel la connaissance a priori comprend au moins une direction (471-475) du décalage d'objet (1034) sur les images (401, 402, 401A, 402A).

**2.** Procédé selon la revendication 1, comprenant en outre les étapes consistant à :

- effectuer une corrélation (450, 450A) des images (401, 402, 401A, 402A), et
- sélectionner des points de données de la corrélation (450, 450A) qui correspondent à ladite au moins une direction (471-475) du décalage d'objet (1034),

dans lequel le décalage d'objet (1034) est identifié sur la base des points de données sélectionnés.

**3.** Procédé selon la revendication 2, comprenant en outre les étapes consistant à :

- sélectionner des premiers points de données de la corrélation (450, 450A) qui correspondent à une première direction (471-475) de ladite au moins une direction (471-475),
- sélectionner des deuxièmes points de données de la corrélation (450, 450A) qui correspondent à une deuxième direction (471-475) de ladite au moins une direction (471-475), et
- superposer les premiers points de données et les deuxièmes points de données,

dans lequel le décalage d'objet (1034) est identifié sur la base des points de données sélectionnés et superposés.

**4.** Procédé selon l'une quelconque des revendications 2 ou 3, comprenant en outre l'étape consistant à :

- déterminer ladite au moins une direction (471-475) du décalage d'objet (1034) sur la base d'un positionnement relatif des sources de lumière (121, 121-1, 121-2, 121A, 121B) d'un module d'éclairage (111) du microscope (100) qui sont associées à la pluralité de géométries d'éclairage (300-302) à angle variable.

**5.** Procédé selon l'une quelconque des revendications précédentes,
dans lequel la connaissance a priori comprend une zone de recherche (456, 457, 459) pour le décalage d'objet (1034).

**6.** Procédé selon la revendication 5,

dans lequel l'acquisition des images (401, 402, 401A, 402A) avec la pluralité de géométries d'éclairage (300-302) à angle variable ainsi que le réglage associé de la position Z (501, 502) sont effectués à plusieurs reprises pour une pluralité d'itérations (9010),
dans lequel la connaissance a priori comprend la zone de recherche (456, 457, 459) en fonction de l'itération (9010).

**7.** Procédé selon la revendication 5 ou 6,
dans lequel la connaissance a priori comprend la zone de recherche (456, 457, 459) pour différentes plages de profondeur de champ d'un système optique d'imagerie (113) du microscope (100).

**8.** Procédé selon l'une quelconque des revendications précédentes,
dans lequel la connaissance a priori comprend au moins un élément parmi des positions d'imagerie des structures parasites (492, 493) et une position d'imagerie de l'objet mesuré (499) sur les images (401, 402, 401A, 402A) .

**9.** Procédé selon la revendication 8, comprenant en outre les étapes consistant à :

- en fonction des positions d'imagerie des structures parasites (492, 493) : appliquer un pavage d'image (405, 406) aux images (401, 402, 401A, 402A), et
- supprimer une évaluation des images (401, 402, 401A, 402A) dans des tuiles d'image du pavage d'image (405, 406) qui contiennent les structures parasites (492, 493).

**10.** Procédé selon l'une quelconque des revendications précédentes,

dans lequel la connaissance a priori comprend au moins un élément parmi un contraste des structures parasites (492, 493) et un contraste de la représentation (1032, 1033) de l'objet mesuré (499) sur les images (401, 402, 401A, 402A),
dans lequel le procédé comprend en outre les étapes consistant à :

- effectuer une corrélation (450, 450A) des images (401, 402, 401A, 402A),
- identifier au moins un maximum de corrélation (461-463, 469) dans la corrélation (450, 450A), et
- sur la base du contraste des structures parasites (492, 493) : rejeter ledit au moins un maximum de corrélation (461-463, 469).

**11.** Procédé selon l'une quelconque des revendications précédentes,
dans lequel la connaissance a priori comprend une périodicité spatiale locale (499A, 499B) de l'objet mesuré (499).

**12.** Procédé selon l'une quelconque des revendications précédentes, comprenant en outre l'étape consistant à :

- recevoir les données de commande d'une interface utilisateur du microscope (100), et/ou d'un classificateur entraîné qui agit sur les images (401, 402, 401A, 402A).

**13.** Unité de commande pour un microscope qui comprend un circuit logique qui est conçu pour exécuter les étapes suivantes consistant à :

- acquérir des images avec une pluralité de géométries d'éclairage à angle variable, dans laquelle chaque image (401, 402, 401A, 402A) comprend respectivement une représentation d'un objet mesuré selon une géométrie d'éclairage individuelle (300-302),

- sur la base de données de commande qui indiquent une connaissance a priori : effectuer une séparation d'une représentation de l'objet mesuré des structures parasites sur les images,
- sur la base de la séparation : identifier des parties sur les images, variables quant à une variation de la géométrie d'éclairage à angle variable, comme un décalage d'objet de l'objet mesuré,
- sur la base du décalage d'objet : déterminer une position de défocalisation de l'objet mesuré, et
- sur la base de la position de défocalisation :

  régler la position Z d'une plateforme d'échantillon du microscope,
  dans laquelle la connaissance a priori comprend au moins une direction (471-475) du décalage d'objet (1034) sur les images (401, 402, 401A, 402A).

14. Unité de commande pour un microscope selon la revendication 13,
   dans laquelle le circuit logique est en outre conçu pour exécuter un procédé selon l'une quelconque des revendications 2 à 12.

15. Microscope comprenant une unité de commande selon l'une quelconque des revendications 13 ou 14.

FIG. 1

# FIG. 2

```
                    ┌─────────────────────────────────────┐
                    │                                     │
                    │          ┌──────────────────────────────────────────┐  ┌─9001      ▲
                    │          │         Erfasse erstes Bild              │  │           │
                    │          │ mit erster winkelvariabler Beleuchtungsgeometrie │      │
                    │          └──────────────────────────────────────────┘             │  9010
                    │                          │                                         │
                    │          ┌──────────────────────────────────────────┐  ┌─9002      │
                    │          │        Erfasse zweites Bild              │  │           │
                    │          │ mit zweiter winkelvariabler Beleuchtungsgeometrie│      │
                    │          └──────────────────────────────────────────┘             │
                    │                          │                                         │
                    │          ┌──────────────────────────────────────────┐  ┌─9003      │
                    │          │      Trenne Objekt und Störstrukturen    │  │           │
                    │          └──────────────────────────────────────────┘             │
                    │                          │                                         │
                    │          ┌──────────────────────────────────────────┐  ┌─9004      │
                    │          │        Erkenne Objektverschiebung        │  │           │
                    │          └──────────────────────────────────────────┘             │
                    │                          │                                         │
                    │          ┌──────────────────────────────────────────┐  ┌─9005      │
                    │          │         Bestimme Defokusposition         │  │           │
                    │          └──────────────────────────────────────────┘             │
                    │                          │                                         │
                    │          ┌──────────────────────────────────────────┐  ┌─9006      │
                    │          │           Stelle z-Position ein          │  │           │
                    │          └──────────────────────────────────────────┘             │
                    │                          │                                         │
                    │                     ◇ Weitere Iteration? ◇  9007                   │
                    │                          │ JA                                      │
                    │          ┌ ─ ─ ─ ─ ─ ─ ─ ─ ─ ─ ─ ─ ─ ─ ─ ─ ─ ─ ─ ┐  ┌─9008        │
                    │          │      Anpassen Beleuchtungsgeometrien     │             │
                    │          └ ─ ─ ─ ─ ─ ─ ─ ─ ─ ─ ─ ─ ─ ─ ─ ─ ─ ─ ─ ┘             ▼
                    │                          │                            ┌─9009
                    └──────────┤        Teste Konsistenz                  │
                               └ ─ ─ ─ ─ ─ ─ ─ ─ ─ ─ ─ ─ ─ ─ ─ ─ ─ ─ ─ ┘
```

## FIG. 3

## FIG. 4

FIG. 5

Fig. 6

Fig. 7

Fig. 8

Fig. 9

Fig. 10

## FIG. 11

## FIG. 12A

FIG. 12B

Fig. 13

Fig. 14

# FIG. 15

**FIG. 16**

**Einzel-Messung** (9017)

9018 — **Einstellung von Parametern:**
Fokuslage: z,
Versatz genutzter Leucht-Elemente: $\vec{v}$

9016 — $i = i+1$

9019 — **Messung :**
Aufnahme von zwei Bildern mit unterschiedlicher Beleuchtungsgeometrie

9010

9014 — **Änderung der z-Position:**
$\Delta pz = pz_{i+1} - pz_i$

9020 — **Auswertung:**
- Bestimmung Versatz $\vec{c}(peak)$ von Peak in Korrelationsmatrix (in Kamerakoordinaten)
- Konfidenzparameter: C

9021 — **Messwerte werden verworfen**

**Nein**

9022 — $C > C_{Schwellwert}$

**ja**

9013 — **Berechnung der Fokusablage**
$\Delta z = \vec{c}(peak) / s$

9011 — **System-parameter**
L, Mag, $\vec{v}$

9012 — **Initialisierung:**
$s = Mag \cdot \vec{v}/L$

$i = 1$

$i > 1$

9015 — **Anpassung von s so dass:**
$\Delta pz / (\Delta z_{i+1} - \Delta z_i) = 1$

EP 3 557 306 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014109687 A1

- WO 2017081539 A1